# EUROPEAN PATENT APPLICATION

(11) **EP 4 835 644 A1**
(43) Date of publication of application: **04.11.2026**
(21) Application number: 25193123.4
(22) Date of filing: 31.07.2025
(51) Int. Cl.: G06F 8/30, G06F 8/33, G06F 8/34, G06F 11/07, G06F 11/36, G06N 3/0475, G06N 20/00

(54) **CODE GENERATING AND VALIDATING COPILOT**

(30) Priority: 01.05.2025 US 202563798436 P; 11.07.2025 US 202519266665
(71) Applicant: Palantir Technologies Inc., Aventura, Florida 33180 (US)
(72) Inventor: TURCATO, Mark, Denver, 80202 (US); COATO, Riccardo, Denver, 80202 (US); KRISHNAN, Sriram, Denver, 80202 (US)
(74) Representative: Sayer, Robert David

(57) **Abstract**

A system can be used to generate and execute computer-executable code. The system may receive, via a user interface, a user input describing a task. The system may generate a prompt including the user input and code generation instructions. The code generation instructions may include instructions to generate computer-executable code to perform the task. The system may provide the prompt to an artificial intelligence ("AI") model. The system may receive an output from the Al model in response to the prompt. The output may include computer-executable code. The system may determine whether the computer-executable code is valid. The system may, in response to determining the first computer-executable code is valid, execute the computer-executable code.

## Description

### FIELD

Implementations of the present disclosure relate to systems and techniques for improved performance when executing computer-executable code and more efficient use of processing resources. Implementations may involve improving user interactions with computer-based models wherein generated computer-executable code is only executed if determined to be valid. More specifically, implementations of the present disclosure relate to computerized systems and techniques that improve user interactions with artificial intelligence ("Al") models and interactions of Al models with technical systems through generation, analysis, correction, etc. of computer-executable code based on plain language interactions.

### BACKGROUND

Computers can be programmed to perform calculations and operations utilizing one or more computer-based models. For example, computer-based models, such as language models can be utilized to generate computer-executable code based on a plain language prompt provided to the language models. However, the computer-executable code may not be fully executable and/or may return errors due to bugs in the generated computer-executable code. This leads to poor performance and wastage of processing and/or memory resources.

Computer-based models can be opaque, imprecise, and inconsistent in their replies, which can make computer-executable code generated by the models difficult to debug. Further, the computer-based models are often unable to execute the computer-executable code, which can complicate the back-and-forth responses that may be needed to solve some problems.

### SUMMARY

The systems, methods, and devices described herein each have several aspects, no single one of which is solely responsible for its desirable attributes. Without limiting the scope of this disclosure, several non-limiting features will now be described briefly.

Various aspects of this disclosure relate to systems and methods of generating and validating computer-executable code using one or more artificial intelligence (AI) models. Various problems, such as research problems or hypothesis, and solutions benefit from the use of computer-executable code that can aid in the acquisition, transformation, synthesis, graphic display, and/or other processing of information associated with the problem or solutions. However, many who are interested in the problems and solutions may not have the technical knowledge to author, debug, interpret, interpret results from such computer-executable code, and/or otherwise utilize the computer-executable code. Further, the length of the computer-executable code can be time consuming to author, debug, interpret and/or otherwise burdensome.

In some instances, the open ended nature of problems to be solved can make it difficult to create tools (e.g., code authoring and/or model generation tools) that can aid in the generation of the computer-executable code. For example, one research problem may have different tool needs (e.g., may have different models suitable for the research problem) than another.

Certain Al models, such as LLMs, may be used to generate computer-executable code based on plain language prompts provided to the LLMs. However, output from the Al models can be opaque, imprecise, and inconsistent which can lead to computer-executable code that does not adequately address a task set forth by the user (e.g., the problems to be solved, the solutions to be analyzed, and/or other tasks provided the Al models) and/or that does not execute properly. Further, Al models lack the ability to execute the generated computer-executable code, which can complicate processes of generating and debugging compute-executable code. As such, users, such as researchers, can be prevented or impeded from continuing research by a need to author, execute, debug, and/or otherwise interact with computer-executable code, which can limit the scope, timing, and/or accuracy of the research and/or otherwise negatively impact the user.

According to embodiments of the disclosure, the disclosed systems and methods can include a code generating and validating system (referred to herein as the "system") that can allow for the automatic generation, execution, debugging, and/or other interactions with computer-executable code in response to user inputs (e.g., inputted questions, hypotheses, problem, and/or other user input). The disclosed systems and methods can increase the overall efficiency of computer-executable code generation, enabling users to spend more time analyzing results and increasing the breadth and/or depth of examination of the presented problems. Processing resources can be used more efficiently by not executing computer-executable code if an earlier validation of the computer-executable code indicates that it is invalid, and instead an automated process of remedying the invalid computer-executable code is performed until valid.

According to various embodiments, the system can receive user input describing a task (e.g., giving a problem to be solved, asking a question, and/or the like). The user input can be in plain language. For example, a user could input, "Given the provided source material, please provide a chart of the average rainfall in California, by month, for the last 15 years", and/or "How much rain has California received, on average, each month of the last 15 years?" Given one or both of these user inputs, the system can use the techniques described herein to analyze the given source material, generate computer-executable code that can create the requested chart, can validate that the code works (e.g., the code actually compiles, executes, and generates a chart), and can inspect the generated code, the chart, and/or other information to determine if the outputted chart adequately addresses the original prompt.

As may often be the case, the user may have follow-up questions or tasks in response to output from the system. For instance, in the above example, a researcher may be attempting to build a predictive model for projecting avocado production in California based on a number of factors, including rainfall for the previous two years. In this example, the user may input, "Generate a model that predicts avocado growth in California based on the rainfall of the previous two years" and as a further follow up "how does the model perform when compared to the historical data?" Given the open nature of these example user inputs, the system can determine that multiple pathways of answers are possible and begin traversing each path, validating and analyzing the resulting code along each pathway. This can provide tools for the user to examine the multiple pathways for further insights and to provide further input. However, in some implementations, the system may continue along each pathway until the system determines the original user input has been adequately addressed (e.g., as defined by a quality metric).

According to various implementations, the system can use the user input and generate one or more prompts to give to Al models based on the user input. The prompts can be a plain language prompt (e.g., such as those commonly used as inputs to LLMs). The prompts can include the original user input (or language derived therefrom) and instructions to generate computer-executable code to perform a task based on the user input. For example, the prompt can include instructions to generate a python script, that when executed will generate, perform, and/or otherwise implement the desired functionality. The system can include one or more components (e.g., the user interface module 104, the prompt generation module 108, the context module 110, the knowledge graph module 112, and/or other components) that can aide in the synthesis of information into a generated prompt.

The system can provide the prompt to one or more Al models. For example, the system can provide the prompt to one or more LLMs, machine learning models, reasoning models, and/or any other suitable model. In some embodiments, the type of model the prompt is sent to can be determined based on the user input, the task to be performed, and/or from another information source. In some embodiments, the type of model the prompt is given to may be fixed (e.g., the prompt may go first to an LLM in each instance).

In some embodiments, all, or a portion, of the prompt may be generated by a different Al model. For example, in some instances, the user input may not suggest a task to accomplish with computer-executable code. As a nonlimiting example, a user may input request assistance in formulating a hypothesis. This request may be provided first to an Al model to aid in synthesis and hypothesis generation. The output of the Al model may be and/or include, a prompt for an Al model (whether a different Al model or the same Al model) with the instructions to generate computer-executable code.

The system can receive a response from an Al model with the computer-executable code (also referred to as the "output" of the Al model). For example, the instructions in the prompt can include instructions to output computer-executable code in a particular coding language (e.g., python, R, C, C++, and/or the like). The system can parse the response and extract the computer-executable code from the Al model output.

The system can determine whether the computer-executable code is valid (described generally herein as the system "validating" the computer-executable code when the system determines the computer-executable code is valid and "invalidating" the computer-executable code when the system determines the computer-executable code is not valid). Various tests can be used to validate the computer-executable code. For example, the system can attempt to compile the code and identify any computer-executable code that does not compile. As another example, the system can attempt to run the computer-executable code and detect any bugs within the computer-executable code (e.g., broken functions, variable errors, memory leaks, and/or any other bug that may adversely affect the performance of the computer-executable code). As yet another example, the system can determine (e.g., by attempting to run the computer-executable code and/or by parsing the computer-executable code) whether the code contains desired functionality. For instance, the system can determine what an output type of the code will be (e.g., a JSON object) string and compared to a desired output (e.g., a chart) and invalidate computer-executable code that does not match. The above examples, are not limiting and other techniques for invalidating the code may be used without departing from the disclosure.

If the system invalidates the computer-executable code, the system can coordinate re-generation of the computer-executable code to address the validity issues. For example, the system can generate and provide subsequent prompts to the Al model, receive output from the Al model, and validate updated computer-executable code provided by the Al model. This process can continue until one or more iterations result in valid computer-executable code. In some embodiments, the system can include information associated with invalidated computer-executable code (e.g., the invalid computer-executable code, information associated with why the code was invalidated, and/or the like) in a prompt to the Al model. In these embodiments, the instructions in the prompt can also include instructions to generate computer-executable code to perform the task based on the information associated with invalidated computer-executable code and the original (and/or subsequent) user input. Accordingly, the system can continue back and forth interactions with Al models until the system has valid computer-executable code.

Once the system has valid computer-executable code, the system can execute the validated computer-executable code. For example, the system can include one or more software programs and/or hardware components that can compile and run the validated computer-executable code. An LLM or other Al models may be unable and/or otherwise unsuitable to natively compile and run computer-executable code. As such, the system can allow for automatic processes to not only regenerate computer-executable code until valid computer-executable code is available to the system, but can also automatically execute the computer-executable code without requiring further interactions with a user and/or user device.

The results of executing the computer-executable code may vary depending on the original task. For example, in some instances the executing the computer-executable code may output a parsable JSON object. In some instances, executing the computer-executable code may output a chart. Other output from executing the computer-executable code can include data frames, series, integers, strings, dictionaries, structures, and/or any other suitable output.

The system can save computer executable code in an artifact along with any data values and other properties (e.g., name, description, artifact type, markdown rendering string, and/or the like). The system can create artifacts associated with both validated and invalidated code. The artifact can be used to view logs of previous interactions between the Al model and the system, presented to a user, used in subsequent prompts to Al models, and/or used to revert back to earlier interactions between the system and the Al models. Some of the resulting variables from the execution of the computer-executable code may be time dependent, may depend on other variables at the time, and/or may otherwise be temporal in nature. In some embodiments, the system may store the values of the variables in a string that can be called to when executing the computer-executable code or be used to store results without the need to execute the computer-executable code again (sometimes referred to "pickled values"). In some embodiments, the system can execute the computer-executable code, along with any other required functions, if the artifact is selected and/or otherwise called for.

In addition to validating the computer-executable code, the system can determine whether to generate further prompts after the validated computer-executable code has been executed. For example, the system may receive additional user input and initiate subsequent interactions with Al models to generate additional computer-executable code and associated artifacts that can be stored and/or presented to the user. In some implementations, the system can evaluate the result of executed computer-executable code and determine whether to generate the further prompts. For example, an Al model may output computer-executable code that passes the validation tests (e.g., compiles, meets format requirements, etc.) but, when executed, does not have a result that addresses the original user input and/or task. As another example, an Al model may output computer-executable code that, when executed, does have a result that addresses the original user input and/or task; however, the system may determine that subsequent prompts and responses will further address the user input and/or task and/or may determine that alternative prompts (e.g., prompts that start separate branches of analysis that are evaluated in parallel to other prompts and responses).

The evaluation can be one or both of a substantive or an objective inquiry. For example, the system may utilize an Al model, such as a supervising agent model to oversee the progression of system and Al model interactions in response to the user input. This supervising agent model may evaluate the result of executing the computer-executed code and make a substantive determination (e.g., determine that the result is not helpful for a particular research prompt, determine that other computer-executable code would also be helpful for a particular research prompt, and/or substantive determinations). The supervising agent model may evaluate the result of executing the computer-executed code and make an objective determination (e.g., four types of functions were called for in the prompt and only three are present in the resulting charts). The supervising agent model may then generate subsequent prompts based on the evaluation. This may help the system both account for and correct hallucinations permutated by the Al models and expand analysis even when an apparent solution results from an interaction with an Al model. The Al model may output indications to whether the task is not accomplished by the result of the executed computer-executable code and/or indication to perform additional tasks (e.g., additional tasks based on the original user input and the result of the executed computer-executable code). The indications can be presented to a user and/or used in subsequent prompts to the Al models.

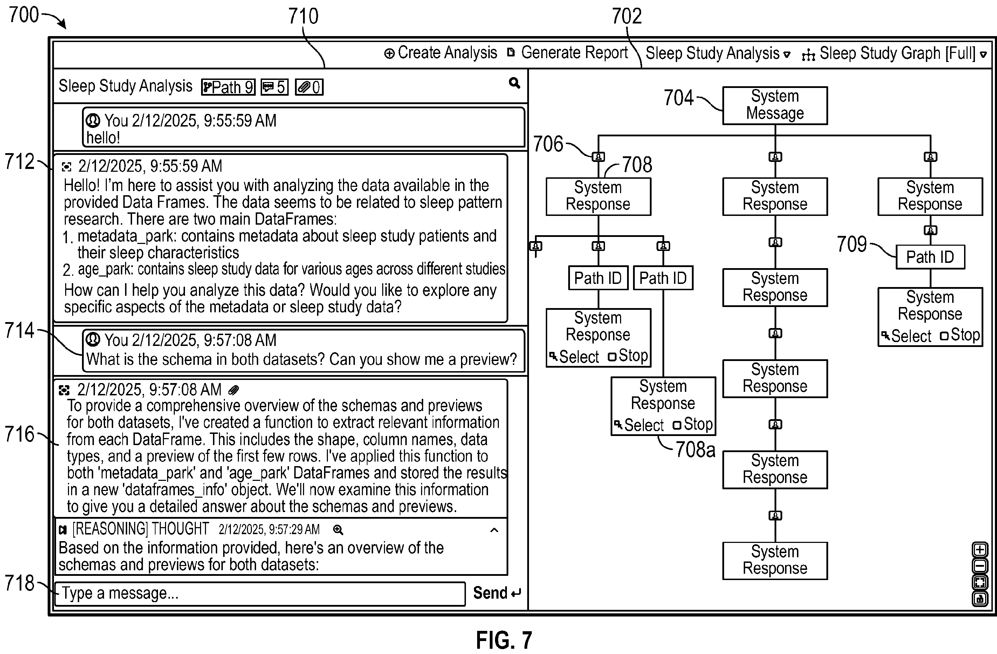

Each interaction between a user and the system and/or the system and the Al models may be recorded, stored, and/or otherwise preserved in generated artifacts. The artifacts may be presented to a user (e.g., as illustrated in user interface 700 of FIG. 7). The presentation can preserve associations between different artifacts. For example, as illustrated in FIG. 7, multiple branches of artifacts can occur and be presented to a user in separate paths that preserve the logical progression used by the system to reach a particular result (e.g., to generate and execute a particular portion of computer-executable code).

According to various aspects of this disclosure, the system can receive, analyze, and store information specific to a particular task and/or user inquiry. In some instances, a user may wish to explore a specific subject, generate computer-executable code based on one or more particular sources, and/or otherwise use sources input (e.g., by the user) or accessed by the system. For example, a user may wish to limit the scope of the analysis performed by the system and/or Al models and thereby limit the resulting computer-executable code and information used in support or execution of the computer-executable code to the particular sources. As another example, the user may want to provide specific context to the system and/or Al models relevant to the user's questions or tasks.

The system can receive or access one or more information sources associated with a task (and/or otherwise associated with a user input). The system can extract information nodes that are associated with portions of information in the information sources. As used herein, information nodes are references to logical groupings of related information. For example, an information node can include one or more data objects identified within the information source (e.g., a drug being tested). An information node can also include all of a subsection of the information source (e.g., the experimental procedures of a research paper). An information node can also include closely related information that appears separately in an information source and/or in differing information sources (e.g., an information node can include the experimental results of the same experiment conducted and described by different sources). For example, the system may analyze a white paper describing a clinical trial of an active ingredient at reducing the severity of symptoms of an influenza viral infection. In this example, the system may extract an information node, "experimental design" associated with the experimental procedures used, an information node, "experimental participants" associated with the testing body used in the experiments, and an information node "experimental results" associated with the statistical results of the clinical trial.

The system can generate associations between information nodes. For example, the system can generate associations between the "experimental design" and the "experimental results" and/or between the "experimental design" and the "experimental participants." The system can also generate associations between information nodes of disparate sources. For instance, in the example above, the system may also analyze a white paper describing a different clinical trial of the same active ingredient in aiding sleep. In this example, the system may extract information nodes associated with the active ingredient and the results from each clinical trial and associate the active ingredient with each result from the clinical trial and/or associate the results of each clinical trial.

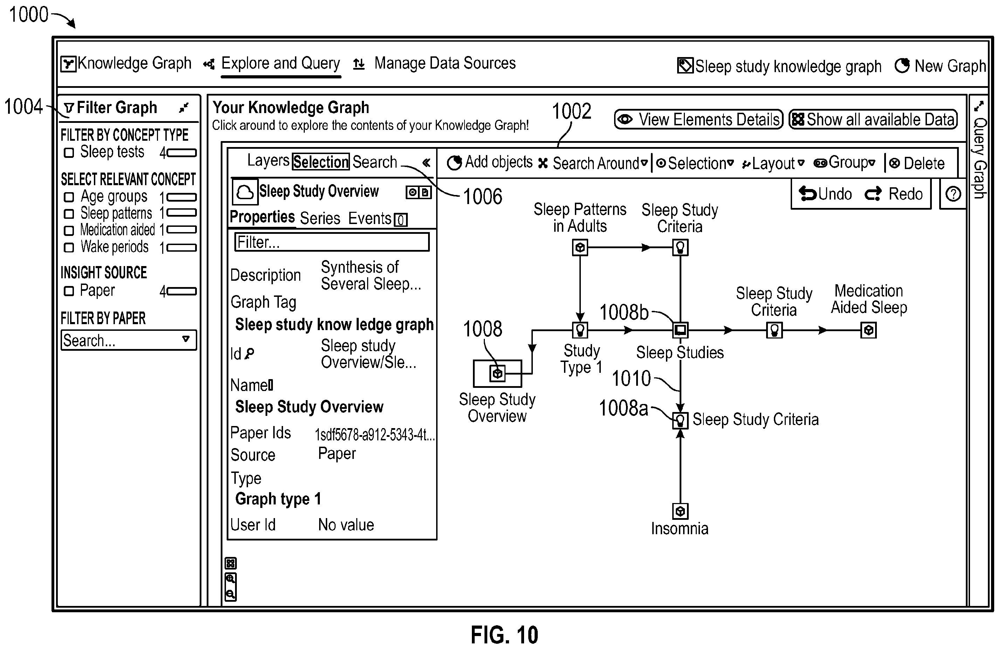

Each of the information nodes and associations of between the information nodes (collectively referred to herein as a "knowledge graph") may be stored together and accessed by the system and/or provided to the Al models. For example, the knowledge graphs may be used when generating prompts, generating computer-executable code, validating computer-executable code, executing computer-executable code, determining whether to generate further prompts, and/or performing other functionality described herein. An example, knowledge graph is illustrated in FIG. 10.

The system may further allow user to interact with the system through a user interface (e.g., a graphical user interface ("GUI") or other types of user interfaces) to provide user input and view system information (e.g., artifacts, results of executed computer-executable code, knowledge graphs, and/or other displayable information described herein). Example user interactions can include, but are not limited to, entering a question, hypothesis, prompt, inquiry, and/or the like into the system, inputting information sources, selecting an artifact to view, selecting an artifact to revert to, entering input associated with an artifact, selecting to terminate a particular system logic path, and/or any other user interactions described herein.

According to various implementations, the system can incorporate and/or communicate with one or more LLMs to perform various functions. Such communications may include, for example, communication of a prompt to generate computer-executable code, communication of a prompt to analyze an information source and extract information node and associations between information nodes (e.g., build a knowledge graph), a context associated with an aspect or analysis being performed by the system, a user-generated prompt, prompt and response examples, example or actual data, and/or the like. For example, the system may employ an LLM, via providing an input to, and receiving an output from, the LLM. The output from the LLM may be parsed and/or a format of the output may be updated to be usable for various aspects of the system, such as to extract computer-executable code, generate a prompt for another LLM (or a different Al model) interaction, determine if a computer-executable code is valid, determine whether to generate an additional prompt for an LLM or other Al model, and/or to perform other functionality described herein.

Various combinations of the above and below recited features, embodiments, and aspects are also disclosed and contemplated by the present disclosure. Additional embodiments of the disclosure are described below in reference to the appended claims, which may serve as an additional summary of the disclosure.

In various implementations, systems and/or computer systems are disclosed that comprise a computer-readable storage medium having program instructions embodied therewith, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising a computer-readable storage medium are disclosed, wherein the computer-readable storage medium has program instructions embodied therewith, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate embodiments of the present disclosure and do not limit the scope of the claims. Aspects and many of the attendant advantages of this disclosure will become more readily appreciated as the same become better understood by reference to the following detailed description, when taken in conjunction with the accompanying drawings.
FIG. 1A is a schematic block diagram illustrating an example computing environment including a code generating and validating system according to various embodiments.
FIG. 1B depicts example connections between various modules of a code generating and validating system according to various embodiments.
FIG. 2 and 3 illustrate example interactions between elements of a code generating and validating system and computing environment components according to various embodiments.
FIG. 4 illustrates an example artifact that can be generated and stored according to various embodiments.
FIG. 5A, 5B, and 6 depicts flowcharts illustrating example methods performed a code generating and validating system according to various embodiments.
FIG. 7 shows an example user interface illustrating a conversation thread and an artifact interface according to various embodiments.
FIG. 8 illustrates a user interface with example computer-executable code according to various embodiments.
FIG. 9 illustrates an example a use of input the tags according to various embodiments.
FIG. 10 illustrates a user interface with an example knowledge graph according to various embodiments.
FIG. 11 is a block diagram of an example computer system consistent with various implementations of the present disclosure.

### DETAILED DESCRIPTION

Although certain embodiments and examples are disclosed below, inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain embodiments; however, the order of description should not be construed to imply that these operations are order dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

To facilitate an understanding of the systems and methods discussed herein, several terms are described below. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("Al") models, machine learning ("ML") models, multimodal models (e.g., models or combinations of models that can accept inputs of multiple modalities, such as images and text), and/or the like.

A "language model" is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may comprise a NN trained using self-supervised learning. An LLM may be of any type, including a Question Answer ("QA") LLM that may be optimized for generating answers from a context, a multimodal LLM/model, and/or the like. An LLM (and/or other models of the present disclosure), may include, for example, a NN trained using self-supervised learning and/or semi-supervised learning, a feedforward NN, a recurrent NN, and/or the like. LLMs can be extremely useful for natural language processing, including receiving natural language prompts and providing natural language responses based on the text on which the model is trained. LLMs may not be data security- or data permissions-aware, because they generally do not retain permissions information associated with the text upon which they are trained. Thus, responses provided by LLMs are typically not limited to any particular permissions-based portion of the model.

While certain aspects and implementations are discussed herein with reference to use of a language model, LLM, and/or Al, those aspects and implementations may be performed by any other language model, LLM, Al model, generative Al model, generative model, ML model, NN, multimodal model, and/or other algorithmic processes. Similarly, while certain aspects and implementations are discussed herein with reference to use of a ML model, language model, or LLM, those aspects and implementations may be performed by any other Al model, generative Al model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LLaMA (Large Language Model Meta AI), and BigScience Large Open-science Open-access Multilingual Language Model (BLOOM).

A "Data Processing Service" (or "Service" or "Plug-in") can be any software and/or computer-based service that receives and/or responds to requests for data and/or data processing. Such a service may be accessible via an API that is exposed to an Agent System (and/or other remote systems) and allows data processing requests to be received via API calls from those systems (e.g., an agent). Such a service may be implemented as a plug-in. A few examples of services or plug-ins include a table search service, a filter service, an object search service, a text search service, or any other appropriate search service, indexing services, services for formatting text or visual graphics, services for generating, creating, embedding and/or managing interactive objects in a graphical user interface, services for caching data, services for writing to databases, or any other data retrieval, processing, and/or analysis function.

A "prompt" (or "natural language prompt," "model input," and/or the like) can be, for example, a term, phrase, question, and/or statement written in a human language (e.g., English, Chinese, Spanish, etc.) that serves as a starting point for a language model and/or other language processing. A prompt may include only a user input or may be generated based on a user input, such as by a prompt generation module (e.g., of an artificial intelligence system) that supplements a user input with instructions, examples, and/or information that may improve the effectiveness (e.g., accuracy and/or relevance) of an output from the language model. A prompt may be provided to an LLM which the LLM can use to generate a response (or "model output").

"User Input" (or "Natural Language Input," "User Query," "User Operation," and/or the like) can be any operations performed by one or more users to user interface(s) and/or other user input devices associated with a system. Such user inputs can include a term, phrase, question, and/or statement written in a human language (e.g., English, Chinese, Spanish, etc.) that is provided by a user, such as via a keyboard, mouse, touchscreen, voice recognition, and/or other input device. User input can include a task to be performed, such as by an LLM, in whole or in part. User input can include a request for data, such as data accessed and/or processed by one or more services. User input can indicate one or more tools associated with the user request or task which may facilitate performing the task. User input can indicate one or more data object types associated with a tool. User input can indicate one or more actions associated with a tool. User input can include a user selection of a format for a response from an LLM. User input can include a user-defined variable to which a response may be saved.

"Context" (or "Context Items") can be any information associated with user inputs, prompts, responses, etc. that are generated and/or communicated to/from the user, the artificial intelligence system, the LLM, the data processing services, and/or any other device or system. For example, context may include a conversation history of all of the user inputs, prompts, and responses of a user session. Context may be provided to an LLM to help an LLM understand the meaning of and/or to process a prompt, such as a specific piece of text within a prompt. Context can include information associated with a user, user session, or some other characteristic, which may be stored and/or managed by a context module. Context may include all or part of a conversation history from one or more sessions with the user (e.g., a sequence of user prompts and orchestrator selector responses or results, and/or user selections (e.g., via a point and click interface or other graphical user interface). Thus, context may include one or more of: previous analyses performed by the user, previous prompts provided by the user, previous conversation of the user with the language model, schema of data being analyzed, a role of the user, a context of the data processing system (e.g., the field), and/or other contextual information.

A context module may provide all or only a relevant portion of context to a selection module for use in selecting one or more plug-ins and/or service orchestrators (e.g., configured to generate requests to plug-ins) for use in generating a properly formatted service request. Context can include tool information. Context can include tool implementation examples. In some embodiments, context may include identification of services and parameters of prior operations, but not underlying data that was accessed or retrieved by the service (e.g., use of graph visualization service and graph parameters without indicating the data illustrated in the graph). In some embodiments, context may include some or all of the underlying data accessed or retrieved by the service.

The term "tool," as used in the present disclosure, can refer to a specific capability that is available to an agent to solve a given problem. In its core, a tool may be mostly responsible to perform a deterministic action. A tool may allow an agent to interact with the operational system, an ontology, internal databases and system, and/or external systems. A tool can be any set of logic or rules that can be provided to an agent for the agent's use, such as to obtain additional information by generating a request for access to additional data via a plug-in. Thus, a tool can be used by an LLM or an agent to generate requests (that may be fulfilled by the AIS) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Example tools include ontology function tool, date/time tool, query objects tool, calculator tool, and apply action tool. Tools, or the set of logic they comprise for performing one or more operations, may be defined by a system, external database, ontology and/or a user.

"Tool Information" can include information associated with a tool that is provided to an LLM and is usable to implement the tool functionality. Tool information can indicate how data is structured, such as in an ontology. Tool information can indicate properties associated with a particular data object type, such as a data object type associated with a selected tool. Tool information can include instructions for implementing a tool. Tool information can include instructions for generating a tool call to use the tool, including instructions for formatting a tool call. In some implementations, tool information can comprise tool implementation examples for executing one or more tool operations which can include pre-defined examples, user-selected examples, user-generated examples, and/or examples that are automatically dynamically configured based on context.

An "ontology" can include stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types.

A "data object" (or "object" or "data object instance") can be a data container for information representing a specific thing in the world that has a number of definable properties. For example, a data object can represent an entity such as a person, a place, an organization, a market instrument, or other noun. A data object can represent an event that happens at a point in time or for a duration. A data object can represent a document or other unstructured data source such as an e-mail message, a news report, or a written paper or article and/or distinct sub data sources within the document or other unstructured data source. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth.

A "data object type" (or "object type") can be a type of a data object (e.g., person, event, document, and/or the like). Object types may be defined by an ontology and may be modified or updated to include additional object types. An object definition (e.g., in an ontology) may include how the object is related to other objects, such as being a sub-object type of another object type (e.g., an agent may be a sub-object type of a person object type), and the properties the object type may have.

The term "computer-based agent" (or "agent," "LLM-based agent," "Al-based agent," and/or "Al agent"), as used in the present disclosure, can refer to a computational decision-making computer-based entity that is designed to be specialized at solving data analysis tasks, such as analytical and/or computational tasks or problems, and/or a computer-based entity that can execute certain tools to solve specific tasks or problems. The computational tasks or problems, and/or data analysis tasks or problems, that a particular agent can solve can include simple (e.g., sending a single request to a large language model ("LLM") service) or more complex tasks (e.g., chaining a set of tools behind each other in a dynamic fashion to solve a complex problem). For example, a complex computation task or problem can include generating a software program as requested by a user query. According to various implementations, a computer-based agent can include a system (e.g., one or more computer-based and/or software systems) in which one or more LLMs dynamically and/or iteratively direct the processes, tasks, tool usage, and/or the like, of the agent and/or one or more LLMs. A computer-based agent can include a system (e.g., one or more computer-based and/or software systems) in which one or more LLMs and/or the agent maintains control over how the agent accomplishes one or more tasks. An agent that involves and/or includes an LLM can be referred to herein as an "LLM-based agent," and an agent that involves and/or includes a computer-based model and/or Al model (e.g., including LLMs) can be referred to herein as an "Al-based agent." In various implementations, an agent can be defined and/or configured by a combination of building blocks including one or more of: (1) agent logic: a core programmatic definition on how this specific agent should interact with the available tools, configurations, and the user; (2) tools: a defined set of tools available for the specific agent; (3) guardrails: a security mechanism to control the interaction of the agent with the system, such as permissions regarding ontology access; and (4) agent storage (herein also referred to as "agent memory"): a data store and/or memory space allowing an individual agent to keep track of relevant information (e.g., messages and accessories) during and across runs.

In various implementations, systems and/or computer systems are disclosed that comprise a computer readable storage medium having program instructions embodied therewith, and one or more processors configured to execute the program instructions to cause the systems and/or computer systems to perform operations comprising one or more aspects of the above- and/or below-described implementations (including one or more aspects of the implementations described above).

In various implementations, computer-implemented methods are disclosed in which, by one or more processors executing program instructions, one or more aspects of the above- and/or below-described implementations (including one or more aspects of the implementations described above) are implemented and/or performed.

In various implementations, computer program products comprising a computer readable storage medium are disclosed, wherein the computer readable storage medium has program instructions embodied therewith, the program instructions executable by one or more processors to cause the one or more processors to perform operations comprising one or more aspects of the above- and/or below-described implementations (including one or more aspects of the implementations described above).

### Overview Of Automatic Code Generating and Validating System

Various aspects of this disclosure relate to systems and methods of generating and validating computer-executable code using one or more artificial intelligence (AI) models. Various problems, such as research problems or hypothesis, and solutions benefit from the use of computer-executable code that can aid in the acquisition, transformation, synthesis, graphic display, and/or other processing of information associated with the problem or solutions. However, many who are interested in the problems and solutions may not have the technical knowledge to author, debug, interpret, interpret results from such computer-executable code, and/or otherwise utilize the computer-executable code. Further, the length of the computer-executable code can be time consuming to author, debug, interpret and/or otherwise burdensome.

In some instances, the open ended nature of problems to be solved can make it difficult to create tools (e.g., code authoring and/or model generation tools) that can aid in the generation of the computer-executable code. For example, one research problem may have different tool needs (e.g., may have different models suitable for the research problem) than another.

Certain Al models, such as LLMs, may be used to generate computer-executable code based on plain language prompts provided to the LLMs. However, output from the Al models can be opaque, imprecise, and inconsistent which can lead to computer-executable code that does not adequately address a task set forth by the user (e.g., the problems to be solved, the solutions to be analyzed, and/or other tasks provided the Al models) and/or that does not execute properly. Further, Al models lack the ability to execute the generated computer-executable code, which can complicate processes of generating and debugging compute-executable code. As such, users, such as researchers, can be prevented or impeded from continuing research by a need to author, execute, debug, and/or otherwise interact with computer-executable code, which can limit the scope, timing, and/or accuracy of the research and/or otherwise negatively impact the user.

According to embodiments of the disclosure, the disclosed systems and methods can include a code generating and validating system (referred to herein as the "system") that can allow for the automatic generation, execution, debugging, and/or other interactions with computer-executable code in response to user inputs (e.g., inputted questions, hypotheses, problem, and/or other user input). The disclosed systems and methods can increase the overall efficiency of computer-executable code generation, enabling users to spend more time analyzing results and increasing the breadth and/or depth of examination of the presented problems.

According to various embodiments, the system can receive user input describing a task (e.g., giving a problem to be solved, asking a question, and/or the like). The user input can be in plain language. For example, a user could input, "Given the provided source material, please provide a chart of the average rainfall in California, by month, for the last 15 years", and/or "How much rain has California received, on average, each month of the last 15 years?" Given one or both of these user inputs, the system can use the techniques described herein to analyze the given source material, generate computer-executable code that can create the requested chart, can validate that the code works (e.g., the code actually compiles, executes, and generates a chart), and can inspect the generated code, the chart, and/or other information to determine if the outputted chart adequately addresses the original prompt.

As may often be the case, the user may have follow-up questions or tasks in response to output from the system. For instance, in the above example, a researcher may be attempting to build a predictive model for projecting avocado production in California based on a number of factors, including rainfall for the previous two years. In this example, the user may input, "Generate a model that predicts avocado growth in California based on the rainfall of the previous two years" and as a further follow up "how does the model perform when compared to the historical data?" Given the open nature of these example user inputs, the system can determine that multiple pathways of answers are possible and begin traversing each path, validating and analyzing the resulting code along each pathway. This can provide tools for the user to examine the multiple pathways for further insights and to provide further input. However, in some implementations, the system may continue along each pathway until the system determines the original user input has been adequately addressed (e.g., as defined by a quality metric).

According to various implementations, the system can use the user input and generate one or more prompts to give to Al models based on the user input. The prompts can be a plain language prompt (e.g., such as those commonly used as inputs to LLMs). The prompts can include the original user input (or language derived therefrom) and instructions to generate computer-executable code to perform a task based on the user input. For example, the prompt can include instructions to generate a python script, that when executed will generate, perform, and/or otherwise implement the desired functionality. The system can include one or more components (e.g., the user interface module 104, the prompt generation module 108, the context module 110, the knowledge graph module 112, and/or other components) that can aide in the synthesis of information into a generated prompt.

The system can provide the prompt to one or more Al models. For example, the system can provide the prompt to one or more LLMs, machine learning models, reasoning models, and/or any other suitable model. In some embodiments, the type of model the prompt is sent to can be determined based on the user input, the task to be performed, and/or from another information source. In some embodiments, the type of model the prompt is given to may be fixed (e.g., the prompt may go first to an LLM in each instance).

In some embodiments, all, or a portion, of the prompt may be generated by a different Al model. For example, in some instances, the user input may not suggest a task to accomplish with computer-executable code. As a nonlimiting example, a user may input request assistance in formulating a hypothesis. This request may be provided first to an Al model to aid in synthesis and hypothesis generation. The output of the Al model may be and/or include, a prompt for an Al model (whether a different Al model or the same Al model) with the instructions to generate computer-executable code.

The system can receive a response from an Al model with the computer-executable code (also referred to as the "output" of the Al model). For example, the instructions in the prompt can include instructions to output computer-executable code in a particular coding language (e.g., python, R, C, C++, and/or the like). The system can parse the response and extract the computer-executable code from the Al model output.

The system can determine whether the computer-executable code is valid (described generally herein as the system "validating" the computer-executable code when the system determines the computer-executable code is valid and "invalidating" the computer-executable code when the system determines the computer-executable code is not valid). Various tests can be used to validate the computer-executable code. For example, the system can attempt to compile the code and identify any computer-executable code that does not compile. As another example, the system can attempt to run the computer-executable code and detect any bugs within the computer-executable code (e.g., broken functions, variable errors, memory leaks, and/or any other bug that may adversely affect the performance of the computer-executable code). As yet another example, the system can determine (e.g., by attempting to run the computer-executable code and/or by parsing the computer-executable code) whether the code contains desired functionality. For instance, the system can determine what an output type of the code will be (e.g., a JSON object) string and compared to a desired output (e.g., a chart) and invalidate computer-executable code that does not match. The above examples, are not limiting and other techniques for invalidating the code may be used without departing from the disclosure.

If the system invalidates the computer-executable code, the system can coordinate re-generation of the computer-executable code to address the validity issues. For example, the system can generate and provide subsequent prompts to the Al model, receive output from the Al model, and validate updated computer-executable code provided by the Al model. This process can continue until one or more iterations result in valid computer-executable code. In some embodiments, the system can include information associated with invalidated computer-executable code (e.g., the invalid computer-executable code, information associated with why the code was invalidated, and/or the like) in a prompt to the Al model. In these embodiments, the instructions in the prompt can also include instructions to generate computer-executable code to perform the task based on the information associated with invalidated computer-executable code and the original (and/or subsequent) user input. Accordingly, the system can continue back and forth interactions with Al models until the system has valid computer-executable code.

Once the system has valid computer-executable code, the system can execute the validated computer-executable code. For example, the system can include one or more software programs and/or hardware components that can compile and run the validated computer-executable code. An LLM or other Al models may be unable and/or otherwise unsuitable to natively compile and run computer-executable code. As such, the system can allow for automatic processes to not only regenerate computer-executable code until valid computer-executable code is available to the system, but can also automatically execute the computer-executable code without requiring further interactions with a user and/or user device.

The results of executing the computer-executable code may vary depending on the original task. For example, in some instances the executing the computer-executable code may output a parsable JSON object. In some instances, executing the computer-executable code may output a chart. Other output from executing the computer-executable code can include data frames, series, integers, strings, dictionaries, structures, and/or any other suitable output.

The system can save computer executable code in an artifact along with any data values and other properties (e.g., name, description, artifact type, markdown rendering string, and/or the like). The system can create artifacts associated with both validated and invalidated code. The artifact can be used to view logs of previous interactions between the Al model and the system, presented to a user, used in subsequent prompts to Al models, and/or used to revert back to earlier interactions between the system and the Al models. Some of the resulting variables from the execution of the computer-executable code may be time dependent, may depend on other variables at the time, and/or may otherwise be temporal in nature. In some embodiments, the system may store the values of the variables in a string that can be called to when executing the computer-executable code or be used to store results without the need to execute the computer-executable code again (sometimes referred to "pickled values"). In some embodiments, the system can execute the computer-executable code, along with any other required functions, if the artifact is selected and/or otherwise called for.

In addition to validating the computer-executable code, the system can determine whether to generate further prompts after the validated computer-executable code has been executed. For example, the system may receive additional user input and initiate subsequent interactions with Al models to generate additional computer-executable code and associated artifacts that can be stored and/or presented to the user. In some implementations, the system can evaluate the result of executed computer-executable code and determine whether to generate the further prompts. For example, an Al model may output computer-executable code that passes the validation tests (e.g., compiles, meets format requirements, etc.) but, when executed, does not have a result that addresses the original user input and/or task. As another example, an Al model may output computer-executable code that, when executed, does have a result that addresses the original user input and/or task; however, the system may determine that subsequent prompts and responses will further address the user input and/or task and/or may determine that alternative prompts (e.g., prompts that start separate branches of analysis that are evaluated in parallel to other prompts and responses).

The evaluation can be one or both of a substantive or an objective inquiry. For example, the system may utilize an Al model, such as a supervising agent model to oversee the progression of system and Al model interactions in response to the user input. This supervising agent model may evaluate the result of executing the computer-executed code and make a substantive determination (e.g., determine that the result is not helpful for a particular research prompt, determine that other computer-executable code would also be helpful for a particular research prompt, and/or substantive determinations). The supervising agent model may evaluate the result of executing the computer-executed code and make an objective determination (e.g., four types of functions were called for in the prompt and only three are present in the resulting charts). The supervising agent model may then generate subsequent prompts based on the evaluation. This may help the system both account for and correct hallucinations permutated by the Al models and expand analysis even when an apparent solution results from an interaction with an Al model. The Al model may output indications to whether the task is not accomplished by the result of the executed computer-executable code and/or indication to perform additional tasks (e.g., additional tasks based on the original user input and the result of the executed computer-executable code). The indications can be presented to a user and/or used in subsequent prompts to the Al models.

Each interaction between a user and the system and/or the system and the Al models may be recorded, stored, and/or otherwise preserved in generated artifacts. The artifacts may be presented to a user (e.g., as illustrated in user interface 700 of FIG. 7). The presentation can preserve associations between different artifacts. For example, as illustrated in FIG. 7, multiple branches of artifacts can occur and be presented to a user in separate paths that preserve the logical progression used by the system to reach a particular result (e.g., to generate and execute a particular portion of computer-executable code).

### Example Aspects of Knowledge Graph

According to various aspects of this disclosure, the system can receive, analyze, and store information specific to a particular task and/or user inquiry. In some instances, a user may wish to explore a specific subject, generate computer-executable code based on one or more particular sources, and/or otherwise use sources input (e.g., by the user) or accessed by the system. For example, a user may wish to limit the scope of the analysis performed by the system and/or Al models and thereby limit the resulting computer-executable code and information used in support or execution of the computer-executable code to the particular sources. As another example, the user may want to provide specific context to the system and/or Al models relevant to the user's questions or tasks.

The system can receive or access one or more information sources associated with a task (and/or otherwise associated with a user input). The system can extract information nodes that are associated with portions of information in the information sources. As used herein, information nodes are references to logical groupings of related information. For example, an information node can include one or more data objects identified within the information source (e.g., a drug being tested). An information node can also include all of a subsection of the information source (e.g., the experimental procedures of a research paper). An information node can also include closely related information that appears separately in an information source and/or in differing information sources (e.g., an information node can include the experimental results of the same experiment conducted and described by different sources). For example, the system may analyze a white paper describing a clinical trial of an active ingredient at reducing the severity of symptoms of an influenza viral infection. In this example, the system may extract an information node, "experimental design" associated with the experimental procedures used, an information node, "experimental participants" associated with the testing body used in the experiments, and an information node "experimental results" associated with the statistical results of the clinical trial.

The system can generate associations between information nodes. For example, the system can generate associations between the "experimental design" and the "experimental results" and/or between the "experimental design" and the "experimental participants." The system can also generate associations between information nodes of disparate sources. For instance, in the example above, the system may also analyze a white paper describing a different clinical trial of the same active ingredient in aiding sleep. In this example, the system may extract information nodes associated with the active ingredient and the results from each clinical trial and associate the active ingredient with each result from the clinical trial and/or associate the results of each clinical trial.

Each of the information nodes and associations of between the information nodes (collectively referred to herein as a "knowledge graph") may be stored together and accessed by the system and/or provided to the Al models. For example, the knowledge graphs may be used when generating prompts, generating computer-executable code, validating computer-executable code, executing computer-executable code, determining whether to generate further prompts, and/or performing other functionality described herein. An example, knowledge graph is illustrated in FIG. 10.

### Example User Interface Features

The system may further allow user to interact with the system through a user interface (e.g., a graphical user interface ("GUI") or other types of user interfaces) to provide user input and view system information (e.g., artifacts, results of executed computer-executable code, knowledge graphs, and/or other displayable information described herein). Example user interactions can include, but are not limited to, entering a question, hypothesis, prompt, inquiry, and/or the like into the system, inputting information sources, selecting an artifact to view, selecting an artifact to revert to, entering input associated with an artifact, selecting to terminate a particular system logic path, and/or any other user interactions described herein.

### Example Large Language Model Functionality

According to various implementations, the system can incorporate and/or communicate with one or more LLMs to perform various functions. Such communications may include, for example, communication of a prompt to generate computer-executable code, communication of a prompt to analyze an information source and extract information node and associations between information nodes (e.g., build a knowledge graph), a context associated with an aspect or analysis being performed by the system, a user-generated prompt, prompt and response examples, example or actual data, and/or the like. For example, the system may employ an LLM, via providing an input to, and receiving an output from, the LLM. The output from the LLM may be parsed and/or a format of the output may be updated to be usable for various aspects of the system, such as to extract computer-executable code, generate a prompt for another LLM (or a different Al model) interaction, determine if a computer-executable code is valid, determine whether to generate an additional prompt for an LLM or other Al model, and/or to perform other functionality described herein.

### Example System and Related Computing Environment

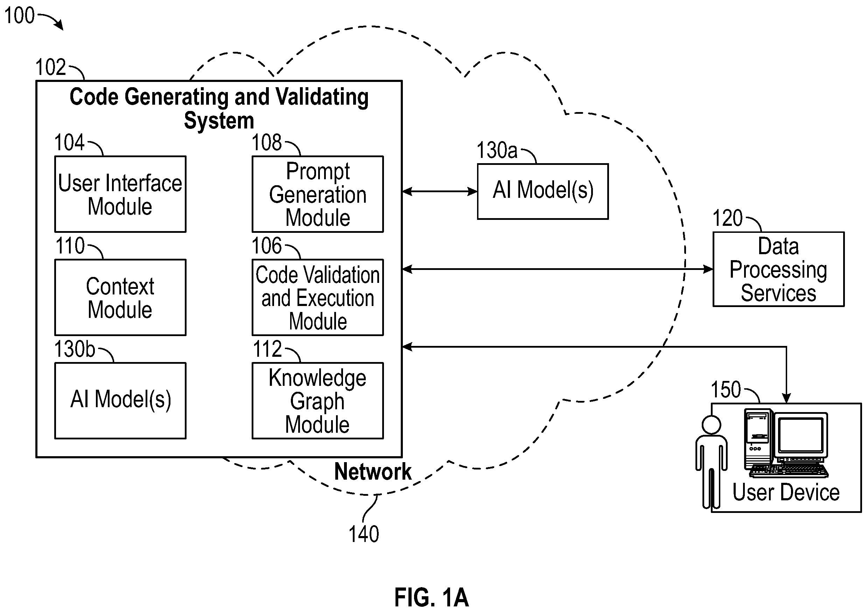

FIG. 1A illustrates an example computing environment 100 including an example code generating and validating system 102 in communication with various devices to respond to a user prompt. The example computing environment 100 includes the code generating and validating system 102, Al model(s) 130b, a network 140, a data processing service 120, and a user device 150. In the illustrated example, the code generating and validating system 102 includes various modules, including a user interface module 104, a prompt generation module 108, a context module 110, a code validation and execution module 106, a knowledge graph module, and one or more Al models 130b.

In the example of FIG. 1A, the various devices are in communication via a network 140, which may include any combination of networks, such as one or more local area network (LAN), personal area network (PAN), wide area network (WAN), the Internet, and/or any other communication network. In some embodiments, modules of the illustrated components, such as the prompt generation module 108, the context module 110, the code validation and execution module 106, the knowledge graph module, and one or more Al models 130b, may communicate via an internal bus and/or via the network 140.

The user interface module 104 can be configured to generate user interface data that may be rendered on a user device 150, such as to receive an initial user input, as well as later user input that may be used to initiate further data processing. In some embodiments, the functionality discussed with reference to the user interface module 104, and/or any other user interface functionality discussed herein, may be performed by a device or service outside of the code generating and validating system 102 and/or the user interface module 104 may be outside the code generating and validating system 102. Example user interfaces are described in greater detail below.

The prompt generation module 108 can be configured to generate a prompt to a language model, such as may be found in the Al models 130a or the Al models 130b, and/or other Al models. As described in further detail below, the prompt generation module 108 may generate such a prompt based on data provided by the user interface module 104 (e.g., a user input) or other modules (e.g., the knowledge graph module 112 or the context module 110) of the code generating and validating system 102. In some implementations, the prompt generation module 108 may use one or more template prompts. The template prompts can be dynamically filled by the prompt generation module 108 during runtime. For example, when the code generating and validating system 102 receives a user input (e.g., via the user interface module 104), the prompt generation module 108 may fill the template prompt with all, or a portion, of the user input and can also fill the template prompt with information from the context module 110, the knowledge graph module 112, the data processing service 120, the Al models 130a, and/or the Al models 130b and/or other information from the user interface module 104.

The context module 110 can be configured to maintain, select, and/or provide some or all relevant context associated with a user input, user session, multiple sessions of the user, and/or other context. The context module 110 may store context for various groups of users, e.g., user inputs from multiple users. The code generating and validating system 102, Al models, and/or other components of the system may make use of context in fulfilling their functions. Context may include, for example, all or part of a conversation history from one or more sessions with the user (e.g., a sequence of user inputs and responses or results), user selections (e.g., via a point and click interface or other graphical user interface), data processing services 120 implemented during the session, user-selected objects and any corresponding properties for those objects, any linked objects as defined by a relevant ontology, and the like. As one example, if a most recent result returned to a user included a generated table of inputs and associated outputs of a study, and a user types "chart results of the study as opposed to polling data," the code generating and validating system 102 may make use of the context of the chart results, as provided by the context module 110, and locate the relevant polling data.

In some embodiments, the user interface module 104 may suggest certain actions to the user (e.g., any actions described herein, or any other related actions) based on context provided by context module 110 (e.g., suggestions of tags associated with tracked information nodes in a knowledge graph).

The knowledge graph module 112 can be configured to receive or otherwise access information sources (e.g., from a user device 150 via the user interface module 104, from the data processing service 120, and/or from another source). In some embodiments, the information source may be associate with a task or goal the code generating and validating system 102 is set to accomplish. For example, a user (e.g., a user of the user device 150) may provide the information sources to be used in performing the task and/or the code generating and validating system 102 (e.g., using the context module 110) may provide information sources determined to be relevant to the task. A user may provide the information sources to limit the scope of the analysis performed by the code generating and validating system 102 and/or Al models 130a and/or Al models 130b and thereby limit the resulting computer-executable code and information used in support or execution of the computer-executable code to the particular sources. Additionally, or alternatively, the user may want to provide specific context to the system and/or Al models relevant to the user's questions or tasks.

The knowledge graph module 112 can extract information nodes that are associated with portions of information in the information sources. For example, as described above the knowledge graph module 112 may analyze a white paper describing a clinical trial of an active ingredient at reducing the severity of symptoms of an influenza viral infection. In this example, the knowledge graph module 112 may extract an information node, "experimental design" associated with the experimental procedures used, an information node, "experimental participants" associated with the testing body used in the experiments, and an information node "experimental results" associated with the statistical results of the clinical trial.

The knowledge graph module 112 can generate associations between information nodes. For example, the knowledge graph module 112 can generate associations between the "experimental design" and the "experimental results" and/or between the "experimental design" and the "experimental participants" in the above described example. The knowledge graph module 112 can also generate associations between information nodes of disparate sources. For instance, in the example above, the knowledge graph module 112 may also analyze a white paper describing a different clinical trial of the same active ingredient in aiding sleep. In this example, the knowledge graph module 112 may extract information nodes associated with the active ingredient and the results from each clinical trial and associate the active ingredient with each result from the clinical trial and/or associate the results of each clinical trial.

The knowledge graph module 112 may compile each of the information nodes and associations of between the information nodes in a knowledge graph and store the knowledge graph internal to the code generating and validating system 102 (e.g., by using the context module 110) and/or external to the code generating and validating system 102 (e.g., on local storage on the user device 150, on external storage accessible via the data processing service 120, and/or elsewhere outside the code generating and validating system 102. The knowledge graph can be provided to the Al models (e.g., the Al models 130a or Al models 130b) and/or used by the components of the code generating and validating system 102. For example, the knowledge graphs can be used by the prompt generation module 108 when generating prompts, by the Al models 130a or Al models 130b when generating computer-executable code, by the code validation and execution module 106 when validating computer-executable code, by the code validation and execution module 106 when executing computer-executable code, by the code validation and execution module 106 when determining whether to generate further prompts, and/or by other components of the computing environment 100 when performing other functionality described herein. An example, knowledge graph is illustrated in FIG. 10.

The knowledge graph module 112 may include and/or interface with one or more Al models (e.g., the Al models 130a and/or Al models 130b). For example, the knowledge graph module 112 may utilize a language model, such as an LLM, and/or utilize another Al model to ingest the information sources and extract information nodes and to generate associates between the information nodes. For example, the knowledge graph module 112 may utilize an LLM to ingest an article and extract logical portions of related information within the article (e.g., the information nodes) and to generate associations between the logical portions (e.g., associations between the information nodes). The knowledge graph module 112 can compile the results in a knowledge graph that can be shared with other components of the code generating and validating system 102 (e.g., the context module 110, the prompt generation module 108, the code validation and execution module 106, and/or another component) and/or displayed to a user device 150 (e.g., via the user interface module 104).

The code validation and execution module 106 can be configured to extract computer-executable code from output of Al models (e.g., Al models 130a or Al models 130b), validate computer-executable code, execute computer-executable code, and/or determine the code generating and validating system 102 should further interact with the Al models to generate more computer-executable code (e.g., determining whether additional prompts should be generated by the prompt generation module 108 and transmitted to Al models). The code validation and execution module 106 can include various hardware and software components such as compilers and debuggers. The code validation and execution module 106 can include and/or interface with one or more Al models in performing various functions.

To extract computer-executable code from output from Al models (e.g., Al models 130a or Al models 130b), the code validation and execution module 106 can parse the output and identify the computer-executable code from the Al model output. For example, the Al model can be instructed to include output computer-executable code in a particular coding language (e.g., python, R, C, C++, and/or the like) that can be identified by the code validation and execution module 106 and extracted.

Once the computer-executable code has been extracted, the code validation and execution module 106 can validate the computer-executable code. The code validation and execution module 106 can implement various tests to validate the computer-executable code. For example, the code validation and execution module 106 can attempt to compile the computer-executable code and invalidate any computer-executable code that does not compile. As another example, the code validation and execution module 106 can attempt to run (e.g. execute) the computer-executable code, detect any bugs within the computer-executable code (e.g., broken functions, variable errors, memory leaks, and/or any other bug that may adversely affect the performance of the computer-executable code), and invalidate computer-executable code with bugs detected therein. As yet another example, the code validation and execution module 106 can determine (e.g., by attempting to execute the computer-executable code and/or by parsing the computer-executable code) whether the code contains desired functionality. For instance, the system can determine what an output type of the code will be (e.g., a JSON object) string and compared to a desired output (e.g., a chart) and invalidate computer-executable code that does not match.

As described above, when the code validation and execution module 106 invalidates the computer-executable code, the code generating and validating system 102 can generate and provide subsequent prompts to the Al model (e.g., using the prompt generation module 108), receive output from the Al model, and validate computer-executable code in the output. The code generating and validating system 102 can continue this process until the code validation and execution module 106 validates the computer-executable code. In some embodiments, the prompt generation module 108 can compile information associated with invalidated computer-executable code (e.g., the invalid computer-executable code, information associated with why the computer-executable code was invalidated, identified errors, such as execution errors, in the computer-executable code, and/or the like) in a prompt to the Al model. In these embodiments, the instructions in the prompt can also include instructions to generate computer-executable code to perform the task based on the information associated with invalidated computer-executable code and the original (and/or subsequent) user input. Accordingly, the code generating and validating system 102 can continue back and forth interactions with Al models until the code generating and validating system 102 has valid computer-executable code.

Once the code generating and validating system 102 has valid computer-executable code, the code validation and execution module 106 can execute the validated computer-executable code. For example, the code validation and execution module 106 can include one or more software programs and/or hardware components that can compile and run the validated computer-executable code. As describe above, LLMs or other Al models may be unable and/or otherwise unsuitable to natively compile and run computer-executable code. As such, the code validation and execution module 106 can allow for automatic processes to not only regenerate computer-executable code until valid computer-executable code is available to the code generating and validating system 102 but can also automatically execute the computer-executable code without requiring further interactions with a user and/or user device (e.g., the user device 150). In some instances, the code generating and validating system 102 can execute the computer-executable code to validate the computer-executable code (e.g., to identify execution errors in the computer-executable code or determine if the computer-executable code has a desired functionality). As described above, any errors in the execution of the computer-executable code can be provided in a prompt (e.g., as information associated with invalidated computer-executable code) to an Al model with instructions to regenerate the computer-executable code. Accordingly, the code validation and execution module 106 can execute (or attempt to execute) computer-executable code each time it is generated and/or regenerated by an Al model.

The results of executing the computer-executable code may vary depending on the original task. For example, in some instances executing the computer-executable code may output a parsable JSON object. In some instances, executing the computer-executable code may output charts, graphs, maps, and/or other suitable information visualizations. Other output from executing the computer-executable code can include data frames, time series data sets, integers, strings, dictionaries, structures, and/or any other suitable output.

The code validation and execution module 106 can save computer executable code (e.g., using the context module 110 or data processing service 120 in an artifact along with any data values and other properties (e.g., name, description, artifact type, markdown rendering string, and/or the like). The system can create artifacts associated with both validated and invalidated code. The artifact can be used to view logs of previous interactions between the Al model and the code generating and validating system 102, presented to a user device 150 (e.g., via the user interface module 104), used by the prompt generation module 108 in subsequent prompts to Al models, and/or used to revert back to earlier interactions between the code generating and validating system 102 and the Al models. Some of the resulting variables from the execution of the computer-executable code may be time dependent, may depend on other variables at the time, and/or may otherwise be temporal in nature. In some embodiments, the code validation and execution module 106 may store the values of the variables in a string that can be called to when executing the computer-executable code or be used to store results without the need to execute the computer-executable code again. In some embodiments, the code validation and execution module 106 can execute the computer-executable code, along with any other required functions, if the artifact is selected (e.g., by a user via the user interface module 104) and/or otherwise called for.

In addition to validating the computer-executable code, the code validation and execution module 106 can determine whether to generate further prompts after the validated computer-executable code has been executed. For example, the code validation and execution module 106 may receive additional user input (e.g., via the user interface module 104) and initiate subsequent interactions with Al models to generate additional computer-executable code and associated artifacts that can be stored and/or presented to the user device 150. In some implementations, the code validation and execution module 106 can evaluate the result of executed computer-executable code and determine whether to generate the further prompts. For example, an Al model may output computer-executable code that passes the validation tests (e.g., compiles, meets format requirements, etc.) but, when executed, does not have a result that addresses the original user input and/or task. As another example, an Al model may output computer-executable code that, when executed, does have a result that addresses the original user input and/or task; however, the code validation and execution module 106 may determine that subsequent prompts and responses will further address the user input and/or task and/or may determine that alternative prompts (e.g., prompts that start separate branches of analysis that are evaluated in parallel to other prompts and responses.

The evaluation can be one or both of a substantive or an objective inquiry. For example, the code validation and execution module 106 may utilize an Al model (e.g., by interacting with one or both of the Al models 130a and/or Al models 130b), such as a supervising agent model to oversee the progression of system and Al model interactions in response to the user input. This supervising agent model may evaluate the result of executing the computer-executed code and make a substantive determination (e.g., determine that the result is not helpful for a particular research prompt, determine that other computer-executable code would also be helpful for a particular research prompt, and/or substantive determinations). The supervising agent model may evaluate the result of executing the computer-executed code and make an objective determination (e.g., four types of functions were called for in the prompt and only three are present in the resulting charts). The supervising agent model may then generate (and/or call for the generation of) subsequent prompts based on the evaluation. This may help the code validation and execution module 106 both account for and correct hallucinations permutated by the Al models and expand analysis even when an apparent solution results from an interaction with an Al model. The Al model may output indications to whether the task is not accomplished by the result of the executed computer-executable code and/or indication to perform additional tasks (e.g., additional tasks based on the original user input and the result of the executed computer-executable code). The indications can be presented to a user device 150 and/or used in subsequent prompts to the Al models (e.g., by the code validation and execution module 106).

Each interaction between a user and the code generating and validating system 102 and/or the code generating and validating system 102 and the Al models (e.g., the Al models 130a and/or Al models 130b) may be recorded, stored, and/or otherwise preserved in generated artifacts. The artifacts may be presented to a user (e.g., as illustrated in user interface 700 of FIG. 7). The presentation can preserve associations between different artifacts. For example, as illustrated in FIG. 7, multiple branches of artifacts can occur and be presented to a user in separate paths that preserve the logical progression used by the code generating and validating system 102 to reach a particular result (e.g., to generate and execute a particular portion of computer-executable code).

As shown in FIG. 1A, the code generating and validating system 102 may be capable of interfacing with multiple Al models. This allows for experimentation, hot-swapping and/or adaptation to different models based on specific use cases or requirements, providing versatility and scalability to the system. In various implementations, the code generating and validating system 102 may interface with the Al models 130b and/or the Al models 130a in order to, for example, generate information nodes, generate links between information nodes, generate computer-executable code, evaluate the results of executing computer executable code, generate prompts, and/or perform other functionality described herein. Although FIG. 1A illustrates that the Al models 130b are internal to the code generating and validating system 102 and the Al models 130a are external to the code generating and validating system 102, in various implementations the Al models 130a and/or the Al models 130b can be internal or external to the code generating and validating system 102. The Al models 130a and Al models 130b can comprise language models, LLMs, machine learning models, reasoning models, and/or any other suitable Al model.

The Al models 130a, AI models 130b, and various modules of the code generating and validating system 102 (e.g., the prompt generation module 106, the knowledge graph module 112, the code validation and execution module 106, and/or another modules) may also communicate with one or more data processing services 120 in the course of fulfilling a user input. The data processing services 120 may include any quantity of services (or "plug-ins") and any available type of service. For example, the data processing services 120 may include one or more search services (e.g., a table search service, an object search service, a text search service, or any other appropriate search service), indexing services, services for formatting text or visual graphics, services for generating, creating, embedding and/or managing interactive objects in a graphical user interface, services for caching data, services for writing to databases, an ontology traversing service (e.g., for traversing an ontology or performing search-arounds in the ontology to surface linked objects or other data items), data storage services (e.g., to store in the ontology) or any other services. For example, the Al models 130a may request (either directly or through the code generating and validating system 102) for data processing services 120 to perform a specific process. In some implementations, the data processing services 120 may be a part of the code generating and validating system 102 (e.g., as part of a data processing services module of the code generating and validating system 102).

In the example of FIG. 1A, a user device 150 (which generally refers to a computing device of any type that may be operated by a human user) may provide a user input to the code generating and validating system 102 indicating a natural language request for some analysis to be performed, function to perform, desired output, a task to be performed and/or other requests to the code generating and validating system 102. The user device 150 may also provide a user input to the code generating and validating system 102 to provide and/or reference information sources (e.g., those used by the knowledge graph module 112). The user input along with other supplemental information or instructions, if any, may be provided to the prompt generation module 108 to generate a prompt that will be transmitted to the Al models 130a and/or Al models 130b. In some embodiments, the user may select one or more object types to limit processing by the code generating and validating system 102 to only those selected object types and/or provide information sources for the code generating and validating system 102 to use (which may increase speed and relevance of responses provided by the system), while in other embodiments the user may not provide any information except an initial input.

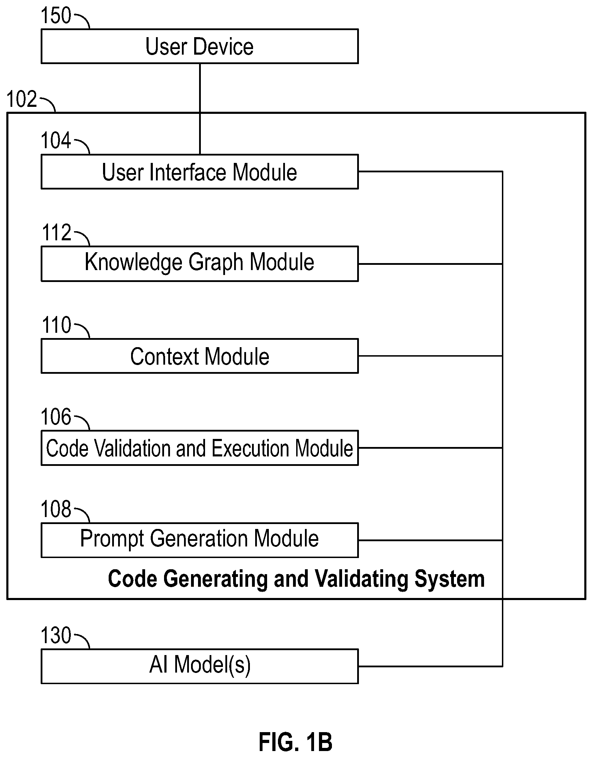

FIG. 1B depicts example connections between various modules of the code generating and validating system 102 and/or of the computing environment 100 of FIG. 1A, including the user device 150, the user interface module 104, the knowledge graph module 112, the context module 110, the code validation and execution module 106, the prompt generation module 108, and the Al models 130 (which can include one or both of the Al models 130a or Al models 130b). The indicated connections and/or data flows of FIG. 1B are exemplary of only certain processes performed by the code generating and validating system 102 and is not meant to include all possible blocks and participants.

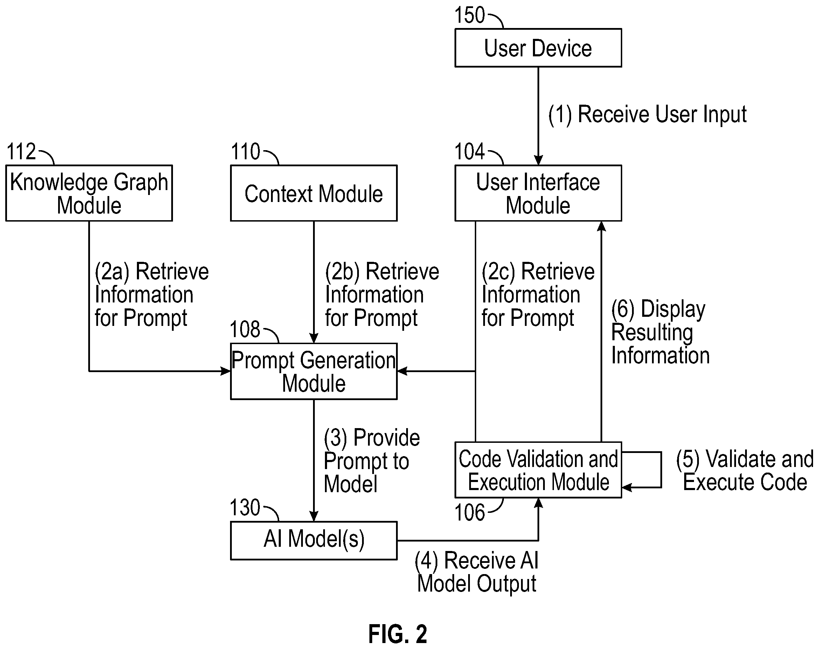

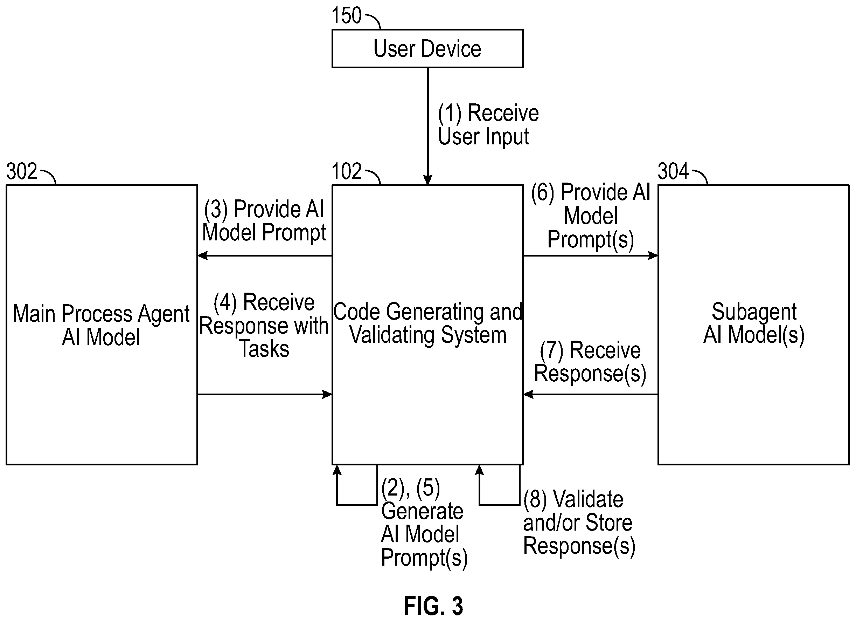

As illustrated in FIG. 1B, in various embodiments, the code generating and validating system 102 may act as an intermediary between a user device 150 and Al models 130 in performing various functions. The code generating and validating system 102 and the Al models 130 may have many interactions based on an initial input from the user device 150. For example, a single user input may result in multiple interactions between the system 102 and Al model 130 without additional user inputs. For example, a user may input via the user device 150 an article and the text string "provide a graph of property damage per yearly quarter in Los Angeles County due to earthquakes for the last 50 years" to the code generating and validating system 102. The code generating and validating system 102 can then facilitate multiple interactions with the Al models 130 to, for example, build knowledge graphs from the article, create computer-executable code configured to create a table from the information in the knowledge graphs, execute that computer-executable code, create additional computer-executable code configured to create a graph (or multiple graphs of varying type and data, as "a graph" could be ambiguous), and execute the computer-executable code. Each interaction and result, including the requested graph, can be stored in an artifact that is inspectable by the user via the user device 150. Further examples of interactions between the code generating and validating system 102 and the user device 150 or Al models 130 are illustrated in FIG.2 and FIG. 3.

FIG. 2 illustrates interactions depicting how elements of the code generating and validating system 102 (and/or elsewhere in the computing environment 100) can generate and validate computer-executable code based on user input. Some of the steps illustrated in FIG. 2 may be repeated. For example, action (2) through action (6) may repeat multiple times.

Beginning at action (1), the user interface module 104 receives user input from the user device 150. The user input can describe a task (e.g., giving a problem to be solved, asking a question, and/or the like. The user input can be in plain language. The user input can also include information sources. As an example, a user could input, "Given the provided source material, please provide a chart of the average rainfall in California, by month, for the last 15 years", and/or "How much rain has California received, on average, each month of the last 15 years?"

At action (2a), action (2b), and action (2c) (collectively referred to herein as "action (2)"), the prompt generation module 108 receives information from the user interface module 104, the knowledge graph module 112, and/or the context module 110. This information can include the user input received at action (1), information from a knowledge graph, contextual information, and/or other information described herein that is used by the prompt generation module 108 to generate prompts for Al models. The prompt generation module 108 can use the information to generate a prompt.

The prompt can be a plain language prompt (e.g., such as those commonly used as inputs to LLMs). The prompt can include the original user input (or language derived therefrom) and instructions to generate computer-executable code to perform a task based on the user input. For example, the prompt can include instructions to generate a python script, that when executed will generate, perform, and/or otherwise implement the desired functionality. In some embodiments, all, or a portion, of the prompt may be generated by a different Al model. For example, in some instances, the user input may not suggest a task to accomplish with computer-executable code. As a nonlimiting example, a user may input request assistance in formulating a hypothesis. This request may be provided first to an Al model to aid in synthesis and hypothesis generation. The output of the Al model may be and/or include, a prompt for an Al model (whether a different Al model or the same Al model) with the instructions to generate computer-executable code.

At action (3) the prompt generation module 108 provides the prompt to the Al models 130. For example, the prompt generation module 108 can provide the prompt to one or more LLMs, machine learning models, reasoning models, and/or any other suitable model. In some embodiments, the type of model the prompt is sent to can be determined based on the user input, the task to be performed, and/or from another information source. In some embodiments, the type of model the prompt is given to may be fixed (e.g., the prompt may go first to an LLM in each instance).

At action (4), the code validation and execution module 106 receives a response from the Al models 130 with machine-executable code. For example, the instructions in the prompt can include instructions to output computer-executable code in a particular coding language (e.g., python, R, C, C++, and/or the like). The code validation and execution module 106 can parse the response and extract the computer-executable code from the Al model output.

At action (5), the code validation and execution module 106 validates and executes the computer-executable code. The code validation and execution module 106 can use various tests to validate the computer-executable code. For example, the code validation and execution module 106 can attempt to compile the code and invalidate any computer-executable code that does not compile. As another example, the code validation and execution module 106 can attempt to run the computer-executable code and detect any bugs within the computer-executable code (e.g., broken functions, variable errors, memory leaks, and/or any other bug that may adversely affect the performance of the computer-executable code). As yet another example, the code validation and execution module 106 can determine (e.g., by attempting to run the computer-executable code and/or by parsing the computer-executable code) whether the code contains desired functionality. For instance, the code validation and execution module 106 can determine what an output type of the code will be (e.g., a JSON object) string and compared to a desired output (e.g., a chart) and invalidate computer-executable code that does not match. The above examples, are not limiting and other techniques for invalidating the computer-executable code may be used without departing from the disclosure.

If at action (5) the code validation and execution module 106 invalidates the computer-executable code, action (2) through action (5) can be repeated until the code validation and execution module 106 validates the computer-executable code. Accordingly, the system can continue back and forth interactions with Al models until the system has valid computer-executable code.

Once the code validation and execution module 106 has valid computer-executable code, the code validation and execution module 106 can execute the validated computer-executable code. For example, the code validation and execution module 106 can include one or more software programs and/or hardware components that can compile and run the validated computer-executable code. As such, the code validation and execution module 106 can allow for automatic processes to not only regenerate computer-executable code until valid computer-executable code is available to the system but can also automatically execute the computer-executable code without requiring further interactions with a user and/or user device.

The results of executing the computer-executable code may vary depending on the original task. For example, in some instances the executing the computer-executable code may output a parsable JSON object. In some instances, executing the computer-executable code may output a chart. Other output from executing the computer-executable code can include data frames, series, integers, strings, dictionaries, structures, and/or any other suitable output.

The code validation and execution module 106 (or another component of the code generating and validating system 102) can save the computer executable code in an artifact along with any data values and other properties (e.g., name, description, artifact type, markdown rendering string, and/or the like). The code generating and validating system 102 can create artifacts associated with both validated and invalidated code. The artifact can be used to view logs of previous interactions between the Al model and the code generating and validating system 102, presented to a user, used in subsequent prompts to Al models, and/or used to revert back to earlier interactions between the code generating and validating system 102 and the Al models. Some of the resulting variables from the execution of the computer-executable code may be time dependent, may depend on other variables at the time, and/or may otherwise be temporal in nature. In some embodiments, the code generating and validating system 102 may store the values of the variables in a string that can be called to when executing the computer-executable code or be used to store results without the need to execute the computer-executable code again. In some embodiments, the code generating and validating system 102 can execute the computer-executable code, along with any other required functions, if the artifact is selected and/or otherwise called for.

At action (6) the resulting information is displayed (e.g., to a user device 150) via the user interface module 104. The resulting information can include the information derived from executing the computer-executable code, artifacts, and/or other information regarding the interactions between the code generating and validating system 102 and the user device 150 and/or the code generating and validating system 102 and the Al models 130.

After, or before, action (6) the code generating and validating system 102 (e.g., using the the code validation and execution module 106) can determine to generate further prompts. Accordingly, any of action 1 through action 6 may be repeated. For example, the user interface module 104 may receive additional user input and the prompt generation module 108 may generate prompts for subsequent interactions with the Al models 130. Further, additional computer-executable code and associated artifacts can be stored and/or presented to the user. In some implementations, at action (5) the code validation and execution module 106 can evaluate the result of executed computer-executable code and determine whether to generate the further prompts. For example, an Al model 130 may output computer-executable code that passes the validation tests (e.g., compiles, meets format requirements, etc.) but, when executed, does not have a result that addresses the original user input and/or task. As another example, an Al model 130 may output computer-executable code that, when executed, does have a result that addresses the original user input and/or task; however, the code validation and execution module 106 may determine that subsequent prompts and responses will further address the user input and/or task and/or may determine that alternative prompts (e.g., prompts that start separate branches of analysis that are evaluated in parallel to other prompts and responses). In these examples, action (2) through action (5) may be repeated with information regarding the determination (e.g., included in the prompt).

The evaluation can be one or both of a substantive or an objective inquiry. For example, the code validation and execution module 106 may utilize an Al model, such as a supervising agent model to oversee the progression of system and Al model interactions in response to the user input. This supervising agent model may evaluate the result of executing the computer-executed code and make a substantive determination (e.g., determine that the result is not helpful for a particular research prompt, determine that other computer-executable code would also be helpful for a particular research prompt, and/or substantive determinations). The supervising agent model may evaluate the result of executing the computer-executed code and make an objective determination (e.g., four types of functions were called for in the prompt and only three are present in the resulting charts). The supervising agent model may then generate subsequent prompts based on the evaluation. This may help the system both account for and correct hallucinations permutated by the Al models and expand analysis even when an apparent solution results from an interaction with an Al model. The Al model may output indications to whether the task is not accomplished by the result of the executed computer-executable code and/or indication to perform additional tasks (e.g., additional tasks based on the original user input and the result of the executed computer-executable code). The indications can be presented to a user and/or used in subsequent prompts to the Al models.

Artifacts of each interaction between the code generating and validating system 102 and the Al models 130 may be displayed to a user, using the user interface module 104 (e.g., as illustrated in user interface 700 of FIG. 7). The presentation can preserve associations between different artifacts. For example, as illustrated in FIG. 7, multiple branches of artifacts can occur and be presented to a user in separate paths that preserve the logical progression used by the system to reach a particular result (e.g., to generate and execute a particular portion of computer-executable code).

FIG. 3 illustrates interactions depicting how the code generating and validating system 102 can interact with multiple Al models in generating and validating computer-executable code based on a user input. In some embodiments, an Al model (or a group of Al models) may oversee or guide the interactions between the code generating and validating system 102 and Al models. In these embodiments, the Al model that oversees or guides such interactions (referred to herein as a "main process agent" Al model) can be given an overall task or goal. Then as the code generating and validating system 102 interacts with Al models, the results can be input to the main process agent Al model to track what has been accomplished, determine if what has been accomplished furthers the task or goal, and/or determine tasks for further interactions between the code generating and validating system 102 and Al models.

FIG. 3 illustrates interactions between a code generating and validating system 102 and a user device 150, main process agent Al model 302, and one or more subagent Al models 304. The some of the subagent Al models 304 may be different models than the others and/or may be trained differently than the others. This may allow the code generating and validating system 102 to leverage the strengths of each of the subagent Al models 302 in accomplishing a task. The main process agent Al model 302 may be any Al model suitable for tracking logical progression and comparing results. For example, the main process agent Al model 302 may comprises LLMs, reasoning models, and/or other suitable models.

At action (1), the user interface module 104 receives user input from the user device 150. The user input can describe a task (e.g., giving a problem to be solved, asking a question, and/or the like. The user input can be in plain language. The user input can also include information sources. As an example, a user looking to examine the effect rainfall has on wildfires could input, "I want to examine the effect yearly rainfall has on wildfires" and/or "is yearly rainfall predictive of wildfires in future years?", along with information sources.

At action (2), the code generating and validating system 102 generates (e.g., using the prompt generation module 108) a prompt for the main process agent Al model 302 based on the user input. As described above, the main process agent Al model 302 can be tasked with overseeing the interactions between the code generating and validating system 102 and the one or more subagent Al models 304 based on the user input. As such, the prompt generated by the code generating and validating system 102 can include instructions informing the main process agent Al model 302 of that role, all, or a portion, of the user input, and information derived from any information sources (e.g., knowledge graphs of the information).

At action (3), the prompt is provided to the main process agent Al model 302, and at action (4), the code generating and validating system 102 receives a response from the main process agent Al model 302 with a specific task (or multiple tasks). The main process agent Al model 302 can receive the prompt and determine based on the user input and information therein that what task (or tasks) can be performed to address the user input. For instance, in the above example user input, the main process agent Al model 302 could determine that a corollary table between aggregate rainfall in a location and wildfires in that area over following years could be helpful in addressing the user input. The main process agent Al model 302 may determine that multiple tasks could be helpful in addressing the user input. In such instances the response in action (4) can include multiple tasks and, in some instances, what Al model (or type of Al model) can be used to perform the task. Each of the tasks in the response can be performed in parallel (e.g., performing action (5) through action (8) on each task in conjunction), be performed serially (e.g., performing action (5) through action (8) on a first task and then repeating the steps for each subsequent task), and/or a combination of the two (e.g., some tasks may be performed in serial while others can be performed in parallel at the same time).

Action (5) through action (8) can be performed in a similar manner as is described in FIG. 2, except information in the response received at action (4) can supplement and/or replace the user input. At action (5), the code generating and validating system 102 can generate a prompt based on the task in the response received at action (4) (an any other information, such as information received from the context module 110, the knowledge graph module 112, and/or other components of the code generating and validating system 102). The prompt can include instructions for an Al model to generate computer-executable code based on the task. Instance, in the above example, the prompt can include instruction to generate computer-executable code that when executed will provide a corollary table between aggregate rainfall in a location and wildfires in that area over following years.

At action (6), the prompt (or prompts) are provided to one or more subagent Al models 304. In some implementations, the same (or similar prompts) may be given to multiple subagent Al models 304. For example, the same prompt may be given to two Al models that vary in model type, are trained from different datasets, and/or otherwise differ. This can be done, for example, to diversify the information retrieved from the subagent Al models 304, to leverage strengths of particular Al models, used in confirming and/or validating the output of the Al models, and/or be done for other reasons.

At action (7), the code generating and validating system 102 receives a response (or responses) from the subagent Al models 304. The code generating and validating system 102 can extract computer-executable code from the responses in any manner described herein (e.g., by parsing the computer-executable code).

At action (8), the code generating and validating system 102 validates and/or stores the responses (e.g., by validating and/or storing the computer-executable code therein). Validating can be performed in a manner similar as was described with reference to FIG. 2. In some embodiments, validating can alternatively or additionally be performed by the main process agent Al model 302 (e.g., by providing the response from the subagent Al models 304 and/or the results of executing the computer-executable code therein in a prompt to the main process agent Al model 302). The main process agent Al model 302 can determine if the results are valid and/or determine additional tasks to be performed by the subagent Al models 304 could be helpful in addressing the user input.

As such, action (2) through action (8) can be repeated with results from earlier iterations provided in a prompt to the main process agent Al model 302 and subsequent tasks determined by the main process agent Al model 302 from these prompts. The results of each integration (and intermediary steps) can be stored in artifacts that can be displayed (e.g., via the user interface module 104) a user (e.g., on the user device 150). In some instances, the user may enter subsequent user inputs that can be given to the main process agent Al model 302 in a prompt to guide the process. Further, the user may select a given artifact and end that particular line of inquiry (e.g., ask the code generating and validating system 102 to not continue down a particular line of reasoning), revert back to a point in a line of inquiry to correct deficiencies and/or explore other options not contemplated by the main process agent Al model 302, and/or otherwise interact with the artifact.

### Example Artifact

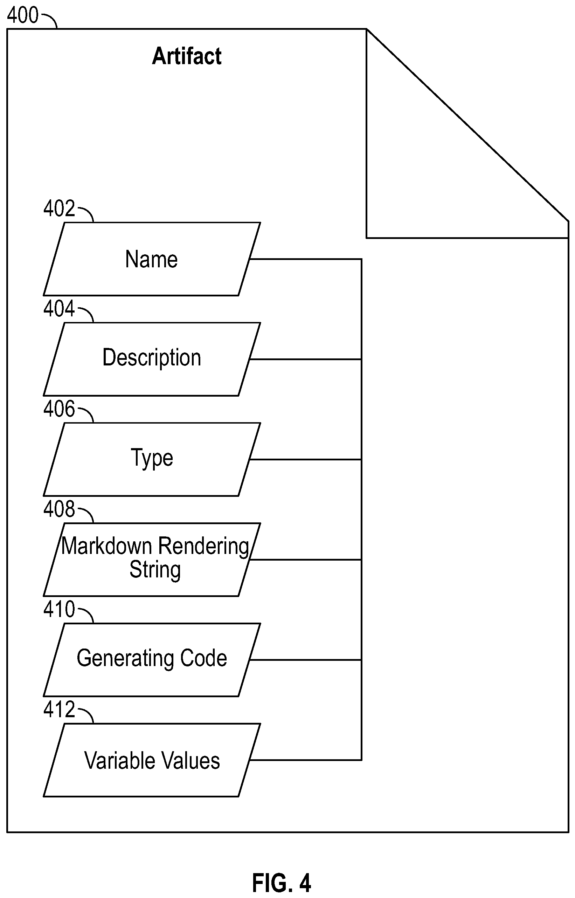

FIG. 4 illustrates an example artifact 400 that can be generated and stored according to the various embodiments described herein. In the illustrated example, the artifact 400 includes a name 402, a description 404, a type 406, a markdown rendering string 408, generating code 410, and variable values 412. However, some artifacts 400 may exclude some of these components and/or may include other components.

The name 402 may be a unique identifier of the artifact. The description 404 may include other identifying or descriptive information of the artifact. The name 402, the description 404, and/or other components of the artifact 400 may be used by the system to organize and/or locate the artifacts (e.g., in an ontology). For example, the name 402, the description 404, and/or other components may be used to search for relevant artifacts and/or used to call a specific artifact.

The type 406 may be a type of information stored in the artifact (e.g., data frames series, integers, strings, dictionaries, structures, charts, and/or other information types). The markdown rending string 408 can be a markdown string of test that can render information in the artifact 400 when called. The generating code 410 can be computer-executable code that, when executed, generates a result of the artifact (e.g., generates one or more data frames, integers, strings, dictionaries, structures, charts, and/or other results). The variable values 412 can include relevant values of variable used in executing the generating code 410. For example, the variable values 412 can include variable values present at the time the generating code 410 was generated (e.g., by an Al model).

As described above, the artifact 400 can be used to view, revert, and/or otherwise interact with interactions between the code generating and validating system 102 and Al models. For example, a user could select an artifact on a user interface, which could render the results of the artifact, allow a user to inspect the computer-executable code, view any information regarding the generation of the artifact, and/or perform other interactions described herein. This can provide a user insight into various steps and logic used by the code generating and validating system 102 and/or the Al models in addressing the user's original input.

### Example Flow Charts

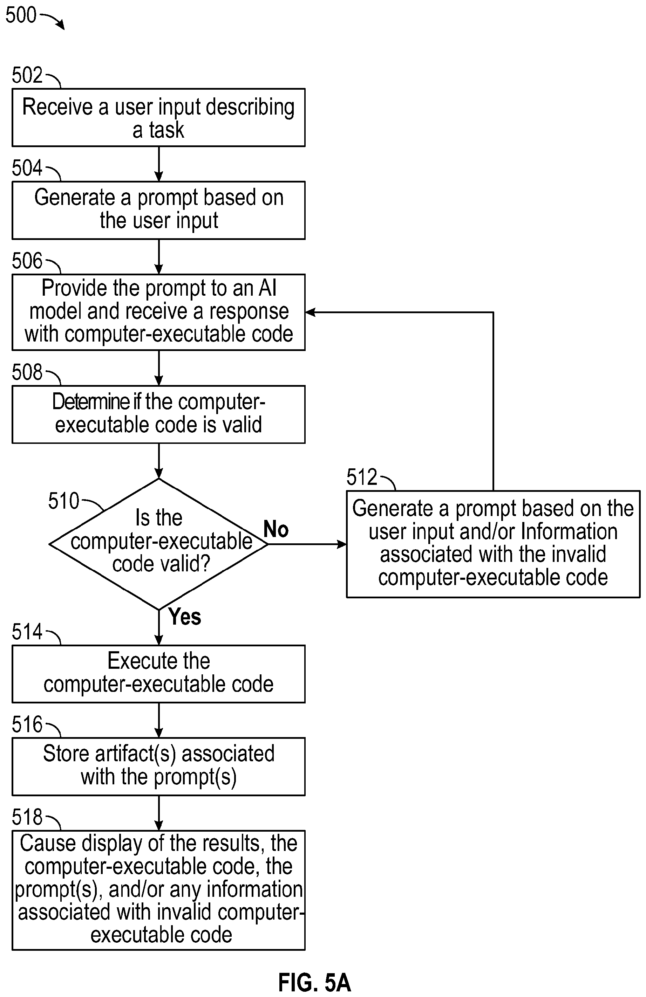

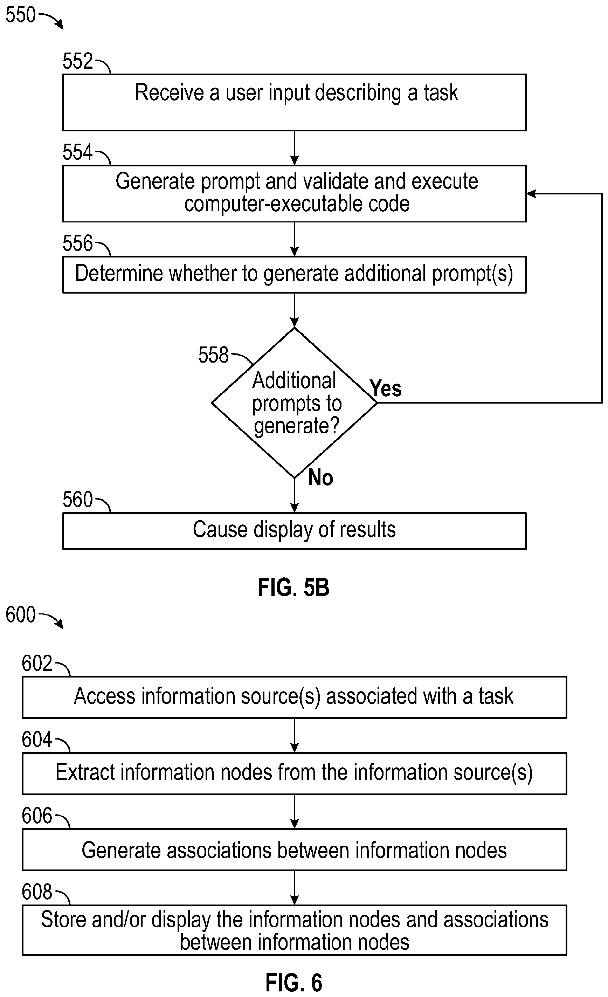

FIGS. 5A, 5B, and 6 show flowcharts illustrating example operations of the code generating and validating system 102 (and/or various other aspects of the example computing environment 100), according to various embodiments. The blocks of the flowcharts illustrate example implementations, and in various other implementations various blocks may be rearranged, optional, and/or omitted, and/or additional block may be added. In various embodiments, the example operations of the system illustrated in FIGS. 5A, 5B, and 6 may be implemented, for example, by the one or more aspects of the code generating and validating system 102, various other aspects of the example computing environment 100, and/or the like.

FIG. 5A depicts a flowchart illustrating an example method 500 according to various embodiments. At block 502, the code generating and validating system 102 receives user input. The user input can describe a task (e.g., giving a problem to be solved, asking a question, and/or the like. The user input can be in plain language. The user input can also include information sources. As an example, a user could input, "Given the provided source material, please provide a chart of the average rainfall in California, by month, for the last 15 years", and/or "How much rain has California received, on average, each month of the last 15 years?"

At block 504, the code generating and validating system 102 generates a prompt for an Al model (or prompts for Al models) based on the user input. The prompt can be a plain language prompt (e.g., such as those commonly used as inputs to LLMs). The prompt can include the original user input (or language derived therefrom) and instructions to generate computer-executable code to perform the task described in the user input. For example, the prompt can include instructions to generate a python script, that when executed will generate, perform, and/or otherwise implement the desired functionality. In some embodiments, all, or a portion, of the prompt may be generated by a different Al model. For example, in some instances, the user input may not suggest a task to accomplish with computer-executable code. As a nonlimiting example, a user may input request assistance in formulating a hypothesis. This request may be provided first to an Al model to aid in synthesis and hypothesis generation. The output of the Al model may be and/or include, a prompt for an Al model (whether a different Al model or the same Al model) with the instructions to generate computer-executable code. In some implementations, the code generating and validating system 102 may use the user input received at block 502, information from a knowledge graph, contextual information, and/or other information described to generate the prompt.

At block 506, the code generating and validating system 102 provides (e.g., transmits) the prompt to the Al model (or prompts to Al models) and receives a response (or responses) with computer-executable code from the Al model(s). For example, the code generating and validating system 102 can provide prompts to one or more LLMs, machine learning models, reasoning models, and/or any other suitable model. In some embodiments, the type of model the prompt is sent to can be determined based on the user input, the task to be performed, and/or from another information source. In some embodiments, the type of model the prompt is given to may be fixed (e.g., the prompt may go first to an LLM in each instance). The instructions in the prompt can include instructions to output computer-executable code in a particular coding language (e.g., python, R, C, C++, and/or the like). The code generating and validating system 102 can parse the response and extract the computer-executable code from the Al model output.

At block 508, the code generating and validating system 102 determines whether the computer executable code is valid. The code generating and validating system 102 can use various tests to determine whether the computer-executable code is valid. For example, the code generating and validating system 102 can attempt to compile the code and invalidate any computer-executable code that does not compile. As another example, the code generating and validating system 102 can attempt to run the computer-executable code and detect any bugs within the computer-executable code (e.g., broken functions, variable errors, memory leaks, and/or any other bug that may adversely affect the performance of the computer-executable code). As yet another example, the code generating and validating system 102 can determine (e.g., by attempting to run the computer-executable code and/or by parsing the computer-executable code) whether the code contains desired functionality. For instance, the code generating and validating system 102 can determine what an output type of the code will be (e.g., a JSON object) string and compared to a desired output (e.g., a chart) and invalidate computer-executable code that does not match. The above examples, are not limiting and other techniques for invalidating the computer-executable code may be used without departing from the disclosure.

If at block 508, the code generating and validating system 102 determines the computer executable code is valid, at block 510, the method 500 proceeds to block 514. If at block 508, the code generating and validating system 102 determines the computer executable code is not valid, at block 510, the method 500 proceeds to block 512.

At block 512, the code generating and validating system 102 generates a subsequent prompt for an Al model based on the user input and/or information associated with the invalid computer-executable code (e.g., the computer-executable code, compilation errors, test results, etc.). Blocks 506-510 can be repeated using the subsequent prompts until, at block 510, it is determined that the computer-executable code is valid.

At block 514, the code generating and validating system 102 executes the computer-executable code. For example, the code generating and validating system 102 can include one or more software programs and/or hardware components that can compile and run the validated computer-executable code. As such, the code generating and validating system 102 can allow for automatic processes to not only regenerate computer-executable code until valid computer-executable code is available to the system but can also automatically execute the computer-executable code without requiring further interactions with a user and/or user device.

The results of executing the computer-executable code may vary depending on the original task. For example, in some instances the executing the computer-executable code may output a parsable JSON object. In some instances, executing the computer-executable code may output a chart. Other output from executing the computer-executable code can include data frames, series, integers, strings, dictionaries, structures, and/or any other suitable output.

At block 516, the code generating and validating system 102 generates and/or stores artifacts associated with each prompt. This can include prompts resulting in invalid computer-executable code. The artifacts can include the computer executable code along with any data values and other properties (e.g., name, description, artifact type, markdown rendering string, and/or the like). The artifact can be used to view logs of previous interactions between the Al model and the code generating and validating system 102, presented to a user, used in subsequent prompts to Al models, and/or used to revert back to earlier interactions between the code generating and validating system 102 and the Al models. Some of the resulting variables from the execution of the computer-executable code may be time dependent, may depend on other variables at the time, and/or may otherwise be temporal in nature. In some embodiments, the code generating and validating system 102 may store the values of the variables in a string that can be called to when executing the computer-executable code or be used to store results without the need to execute the computer-executable code again. In some embodiments, the code generating and validating system 102 can execute the computer-executable code, along with any other required functions, if the artifact is selected and/or otherwise called for.

At block 518, the code generating and validating system 102 causes display of the results, the computer-executable code, the prompt(s), and/or any information associated with invalid computer-executable code (which can be referred to as the "resulting information"). For example, the code generating and validating system 102 can display various artifacts with the resulting information to a user (e.g., a user of the user device 150).

All, or a portion of the steps described in method 500 can be repeated to generate further resulting information. FIG. 5B depicts a flowchart illustrating an example method 550 according to various embodiments. Method 550 can be used to generate iterative resulting information by, for example, repeating all, or a portion of the steps described in method 500.

At block 552, the code generating and validating system 102 receives user input in a manner similar to block 502. At block 554, the code generating and validating system 102 can generate a prompt in a manner similar to block 504. In addition, at block 554, the code generating and validating system 102 can generate a prompt based on a previous iteration of blocks 554 and blocks 556 and 558 described below. The prompt can be provided to Al models, responses received, computer-executable code extracted and validated in a manner similar as is described in method 500. In some implementations, at block 552, the code generating and validating system 102 performs the operations of blocks 504-518 of method 500.

At block 556, the code generating and validating system 102 determines whether to generate additional prompts for Al models. For example, the code generating and validating system 102 can determine if additional prompts are to be generated in response to the user input received at 552 and/or from additional user inputs. The code generating and validating system 102 can evaluate the result of executed computer-executable code and determine whether to generate the further prompts. For example, an Al model may output computer-executable code that passes the validation tests (e.g., compiles, meets format requirements, etc.) but, when executed, does not have a result that addresses the original user input and/or task. As another example, an Al model may output computer-executable code that, when executed, does have a result that addresses the original user input and/or task; however, code generating and validating system 102 may determine that subsequent prompts and responses will further address the user input and/or task and/or may determine that alternative prompts (e.g., prompts that start separate branches of analysis that are evaluated in parallel to other prompts and responses).

The evaluation can be one or both of a substantive or an objective inquiry. For example, the code generating and validating system 102 may utilize an Al model, such as a supervising agent model to oversee the progression of system and Al model interactions in response to the user input. This supervising agent model may evaluate the result of executing the computer-executed code and make a substantive determination (e.g., determine that the result is not helpful for a particular research prompt, determine that other computer-executable code would also be helpful for a particular research prompt, and/or substantive determinations). The supervising agent model may evaluate the result of executing the computer-executed code and make an objective determination (e.g., four types of functions were called for in the prompt and only three are present in the resulting charts). The supervising agent model may then generate subsequent prompts based on the evaluation. This may help the code generating and validating system 102 both account for and correct hallucinations permutated by the Al models and expand analysis even when an apparent solution results from an interaction with an Al model. The Al model may output indications to whether the task is not accomplished by the result of the executed computer-executable code and/or indication to perform additional tasks (e.g., additional tasks based on the original user input and the result of the executed computer-executable code). The indications can be presented to a user and/or used in subsequent prompts to the Al models.

If the code generating and validating system 102 determines there are additional prompts to generate, at block 558 the method 550 proceeds back to 554 where the additional prompt is generated. If the code generating and validating system 102 determines there are not additional prompts to generate, at block 558 the method 550 proceeds to block 560.

At block 560, the code generating and validating system 102 causes display of the results. Artifacts of each interaction between the code generating and validating system 102 and the Al models may be displayed to a user, using the user interface module (e.g., as illustrated in user interface 700 of FIG. 7). The presentation can preserve associations between different artifacts. For example, as illustrated in FIG. 7, multiple branches of artifacts can occur and be presented to a user in separate paths that preserve the logical progression used by the system to reach a particular result (e.g., to generate and execute a particular portion of computer-executable code).

FIG. 6 depicts a flowchart illustrating an example method 600 for generating a knowledge graph according to various embodiments. At block 602, the code generating and validating system 102 receives or access information sources associated with a task (and/or otherwise associated with a user input). The information sources may be input by a user and/or received or access from a different source (e.g., from information in or received from the context module 110 and/or the data processing service 120).

At block 604, the code generating and validating system 102 extracts one or more information nodes from the information sources. The information nodes can include one or more data objects identified within the information source (e.g., a drug being tested). The information nodes can also include all of a subsection of the information source (e.g., the experimental procedures of a research paper). The information nodes can also include closely related information that appears separately in an information source and/or in differing information sources (e.g., an information node can include the experimental results of the same experiment conducted and described by different sources). For example, the code generating and validating system 102 may analyze a white paper describing a clinical trial of an active ingredient at reducing the severity of symptoms of an influenza viral infection. In this example, the code generating and validating system 102 may extract an information node, "experimental design" associated with the experimental procedures used, an information node, "experimental participants" associated with the testing body used in the experiments, and an information node "experimental results" associated with the statistical results of the clinical trial.

At block 606, the code generating and validating system 102 generates association between information nodes. For example, the code generating and validating system 102 can generate associations between the "experimental design" and the "experimental results" and/or between the "experimental design" and the "experimental participants." The code generating and validating system 102 can also generate associations between information nodes of disparate sources. For instance, in the example above, the code generating and validating system 102 may also analyze a white paper describing a different clinical trial of the same active ingredient in aiding sleep. In this example, the code generating and validating system 102 may extract information nodes associated with the active ingredient and the results from each clinical trial and associate the active ingredient with each result from the clinical trial and/or associate the results of each clinical trial.

At block 608, the code generating and validating system 102 stores and/or displays the information nodes and associations between the information nodes. The information nodes can be associated with portions of information in the information sources. For example, the information nodes and associations between the information nodes can be compiled and stored in a knowledge graph. The code generating and validating system 102 may use the knowledge graphs in other operations described herein. For example, the code generating and validating system 102 may use the knowledge graph when generating prompts, generating computer-executable code, validating computer-executable code, executing computer-executable code, determining whether to generate further prompts, and/or performing other functionality described herein. An example, knowledge graph is illustrated in FIG. 10.

### Example User Interface

FIGS. 7-10 show example user interfaces that illustrates various operations that may be performed by the code generating and validating system 102 as described above. The example user interfaces may be presented through the user interface module 104 of the code generating and validating system 102 or a user interface of the user device 150.

FIG. 7 shows an example user interface 700 illustrating a conversation thread 710 and an artifact interface 702. In the illustrated example, the artifact interface 702, includes artifacts of different interactions between a user and a system (e.g., the code generating and validating system 102). The conversation thread 710 can include a textual record of user input and system messages. A user can interact with (e.g., select an artifact from the node interface 702 and be shown the system and user input messages associated with the artifact in the conversation thread 710. For example, artifact 704, a system message, is illustrated as corresponding to message 712, a system message, and artifact 706, a user input, is illustrated as corresponding to message 714, a user input, on the conversation thread 710. A user may use input field 718 to enter new messages into the system.

As illustrated, in FIG. 7, each user input can have more than one corresponding responses, resulting in various paths displayed in the node interface 702. For example, the user entering "What is the schema in both datasets? Can you show me a preview", shown in message 714, results in three system response artifacts 708. Each system response may represent a different option for response the system can take. One such response is shown in message 716. A user can select a different artifact to view one of the other system responses, allowing the user to explore all the options contemplated by the system.

Some, or all, of the system responses may include and or be associated with artifacts containing computer executable-code generated by an Al model and/or the results of executing such computer-executable code. For example, message 716 corresponds to a selected artifact 708. Message 716 includes the reasoning of the system to come to a particular conclusion or result. The artifact associated with 716 can include the computer-executable code used in the systems operations. For example, message 716 includes the statement "I've created a function to extract relevant information from each DataFrame". The computer-executable code used to implement that function can be viewed and inspected.

Each branch of reasoning can be identified by a path ID 709 that can be used to reference and/or view the thread of system response and user input in the conversation thread 710. A user may interact with the last system response in a branch and select to stop that branch. For example, a user may interact with artifact 708a and choose to stop the system from further processing in that path. A user may do this to stop resources from being taken up by lines of reasoning that are less useful.

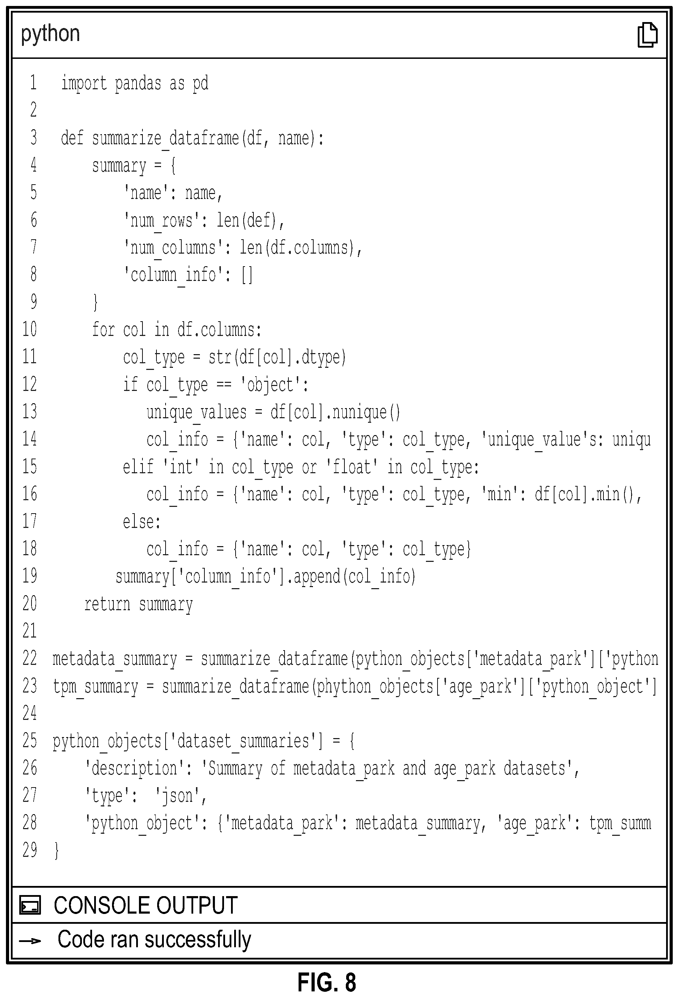

FIG. 8 illustrates a user interface with example computer-executable code according to an embodiment. The illustrated computer-executable code may be executed to perform an operation in response to a user input and or the system reasoning. The computer-executed code may be generated by an Al model, as described herein. The user interface illustrated in FIG. 8 may be displayed in user interface 700 in response to a user input (e.g., a user input inspecting a system response artifact).

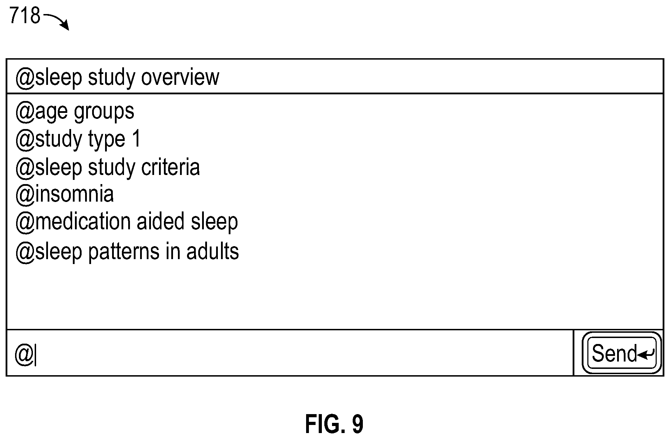

As described above, the system can create and store knowledge graphs (e.g., the knowledge graph illustrated in FIG. 10) with various information nodes and associations between information nodes. A user can use tags associated with the information nodes when inputting new messages to the conversation thread 710. FIG. 9 illustrates an example use of the input field 718 to input the tags. As illustrated, when the user enters in a tag character ("@" in the illustrated example), the system can display tags available in the system. Entering the tag in the message can refer the system to a particular information node (or sets of information nodes) that the user is referencing and/or wishes the system to use in some way.

FIG. 10 illustrates a user interface 1000 with a knowledge graph 1002. The knowledge graph 1002 can be generated using the techniques described herein (e.g., using method 600 of FIG. 6). The knowledge graph 1002 can include various information nodes 1008. As described above, the information nodes can be generated by the system from an information source (e.g., an article, website, video, picture, text document and/or other information source). The knowledge graph 1002 can also include various associations 1010 between the information nodes 1008. For example, association 1010 is illustrated as linking information node 1008a and information node 1008b. These associations can be used by the system to tie in relevant knowledge and share additional context with the user and/or an Al model. Each information nodes 1008 can have any number of associations. For example, an information nodes 1008 may have associations with every other information node 1008 in a knowledge graph. The associations may be determined by an Al model, such as an LLM or reasoning model, tasked with finding links, associations, logical connections, and/or the like between portions of information within an information source or information sources.

A user may select an information node 1008 and view properties of the selected information node 1008 in the illustrated information portion 1006. A user may also select or enter various filtering criteria in the illustrated filter portion 1004. Selecting or entering filtering criteria can change which information nodes 1008 are presented in the knowledge graph 1002.

### Example State Machines

Embodiments of this disclosure may employ one or more state machines, such as finite state machines, dynamic state machines, static state machines, and/or other suitable state machines. The state machines may be used to implement aspects of this disclosure, such as hypothesis generation, code generation, and/or other aspects. The state machines may be generated and/or implemented by the code generating and validating system 102, the Al models 130, and/or other components of the computing environment 100.

In a first non-limiting example, one or more agent models (e.g., the main process agent Al model 302, subagent Al models 304 and/or other Al models 130) may use static state machines to generate and test hypothesis. In the example, a hypothesis generation state machine may have a first state to generate background knowledge (e.g., a knowledge graph). For example, the first state can include directions to do a semantic search against of corpus of research papers using a query. A second state may be to generate a number of hypotheses (e.g., 1-10 or more hypotheses or any subset thereof). A third state may be to reason about whether each of the generated hypotheses are "good" and if none are good return to the first state. If one or more of the hypotheses are good, the state machine can proceed to a testing state machine (which can be implemented as a second statice state machine or as part of the same state machine).

The testing state machine may include a first state where the agent model is directed to generate a plan for how to test each hypothesis. The agent model may be given data to perform such tests. The testing state machine may include subsequent state where the agent model, and/or the code generating and validating system or subagent models, implements the plan (e.g., by generating computer-executable code, validating the computer-executable code, executing the computer-executable code, and/or evaluating the results of executing the computer-executable code against the generated plan.

In a second non-limiting example, one or more agent models (e.g., the main process agent Al model 302, subagent Al models 304 and/or other Al models 130) may use dynamic state machines. In the dynamic state machines, the agent models may plan a finite state machine to attempt (e.g., in response to a user and/or other input) to implement. The agent models may then generate computer-executable code that allows the finite state machine to be navigated by a child process. The dynamic state machine can allow the overall process to be visualized schematically for a user to follow. The dynamic state machine may include states with one or more checks to validate (e.g., using the agent model and/or the code generating and validating system 102 (or another component of the computing environment 100)) that everything in the finite state machine has been completed.

### Example Ontology Writeback

As described above, each step generated by the code generating and validating system 102 and/or Al models 130 may be saved (e.g., in an ontology) as an artifact. Artifacts may have different types. For example, an artifact can have a data frame type, a series type, an integer type, a string type, a dictionary type, a structure type, and/or a chart type.

As illustrated in FIG. 4, an artifact can have one or more properties. For example, FIG. 4 illustrates that each artifact has a name, a descriptions, an artifact type, a markdown rendering string, generating code, and variable values. However, in some implementations, an artifact can include more properties or fewer properties than is illustrated in FIG. 4.

### Example Multi-agent Process

Embodiments of this disclosure may use a multi-agent process. For example, the state machines, computer-executable code generation, and/or other aspects of the disclosure may use a multi-agent process. In the multi-agent process a task may be handed off to multiple agent models (e.g., the Al models 130, the main process agent Al model 302 and/or the subagent Al models 304). The prompts to the agent models may change depending on the current state of the multi-agent process. Further a different type of model may be used depending on the current state of the multi-agent process.

In a non-limiting example, the user may enter a task. In this example, the multi-agent process may begin by generating a prompt for a hypothesis generating model (e.g., a reasoning model, an LLM, and/or another suitable model type). After one or more hypotheses are generated, a different prompt may be generated for a hypothesis testing model (e.g., a reasoning model, an LLM, and/or another suitable model type), which may be the same model or a different model than was used in the hypothesis generating model. Each prompt may include contextual information such as, the original user input, the system prompt, previous agent model responses, subsequent user input, and/or other contextual information. The use of multiple agents may allow a system (e.g., the code generating and validating system 102) to leverage the strengths of particular Al model types and/or use Al models trained for more specific tasks or general tasks, depending on the context.

In some implementations, each state machine (e.g., finite state machines, static state machines, dynamic state machines, and/or other state machines) may use a different agent model that is suitable to implement the state machine (e.g., a different Al model type and/or training set may be better suited for the state machine). For example, the hypothesis generating state machine may be implemented using a reasoning model and the hypothesis testing state machine may be implemented using a code generating model.

### Example Experimentation Process

Embodiments of this disclosure may implement an experimentation process. For example, the code generating and validating system 102 may implement an experimentation process in response to a user input with a task. The experimentation process can include parallel interactions between the code generating and validating system 102 and one or more Al models (e.g., the Al models 130). Each parallel interaction may start an independent path that does not merge back with paths connected with the other parallel interactions (referred to herein as a "fork path"). For example, the artifact interface 702 illustrates several fork paths (e.g., path ID 709) in response to a user input (e.g., artifact 706). Each parallel interaction may alternatively start a path that will eventually merge with the other parallel interactions (referred to herein as a "branch path").

In various implementations, the fork paths may not be given any context from other forks. Fork paths may be implemented by a user (e.g., manually entered as user input). For example, a user may want to explore two variations of the task (e.g., give different background information, enter variations of a question, enter different questions, and/or the like). Fork paths may also be implemented by an Al model (e.g., the main process agent Al model 302), when the Al model determines to explore two separate paths of reasoning.

In various implementations, the branch paths may be different versions of the same path. For example, each branch path may, in response to the same task, generate, validate, and execute computer-executable code. Each branch may include a different type of Al model, a different training set, a different variation of a prompt, and/or differ in other ways. The results of each branch path may be provided to the code generating and validating system 102 and/or a supervising agent model (e.g., the main process agent Al model 302), which may in turn use each branch path to determine an overall result. For example, the agent model 302 may determine that one of the branch paths better addresses the task, combine the results of each branch path (e.g., combine tables generated by each branch path), and/or otherwise merge the results.

Each fork path and branch path may be stored (e.g., as one or more artifacts) and presented to a user. For example, the fork paths and branch paths may be presented on the artifact interface 702 of FIG. 7. A user may explore the various branch paths and fork paths and view the results, prompts, computer-executable code, and/or other information stored in artifacts, providing the user increased information and incite into the various tasks (e.g., questions) the user has input into the code generating and validating system 102.

### Additional Implementation Details and Embodiments

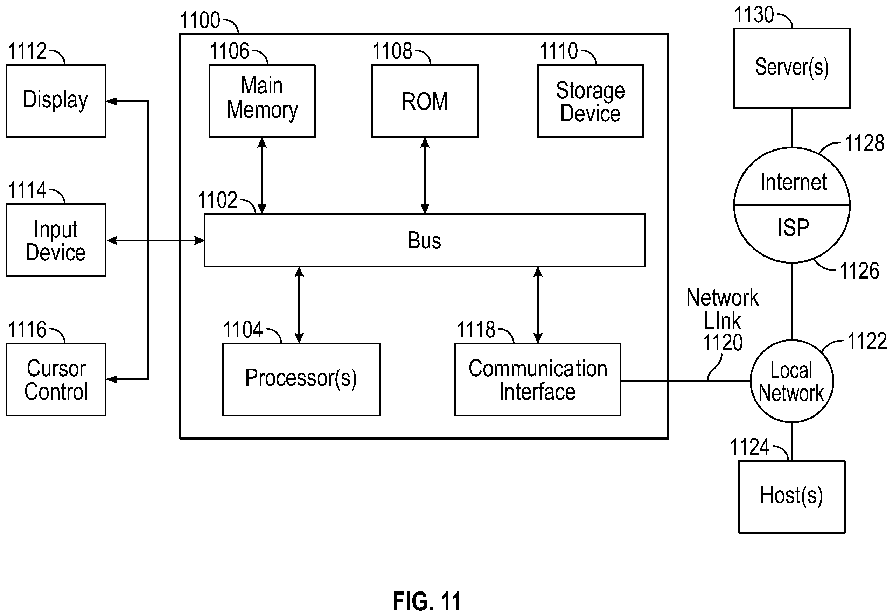

In an implementation of the system (e.g., one or more aspects of the code generating and validating system 102 (FIG. 1A),and/or one or more aspects of the computing environments illustrated in the figures, such as in FIG. 1A and/or the like) may comprise, or be implemented in, a "virtual computing environment". As used herein, the term "virtual computing environment" should be construed broadly to include, for example, computer-readable program instructions executed by one or more processors (e.g., as described in the example of FIG. 11) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may comprise one or more virtual machines, containers, and/or other types of emulations of computing systems or environments. In some implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer readable storage medium (or mediums) having computer readable program instructions thereon for causing a processor to carry out aspects of the present disclosure. Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 11 shows a block diagram that illustrates a computer system 1100 upon which various implementations and/or aspects (e.g., one or more aspects of the computing environments illustrated in FIG 1A, for example, one or more aspects of the code generating and validating system 102, one or more aspects of the user device 150, one or more aspects of the data processing service 120, one or more aspects of the Al models 130a, 130b, and/or the like) may be implemented. Multiple such computer systems 1100 may be used in various implementations of the present disclosure. Computer system 1100 includes a bus 1102 or other communication mechanism for communicating information, and a hardware processor, or multiple processors, 1104 coupled with bus 1102 for processing information. Hardware processor(s) 1104 may be, for example, one or more general purpose microprocessors.

Computer system 1100 also includes a main memory 1106, such as a random-access memory (RAM), cache and/or other dynamic storage devices, coupled to bus 1102 for storing information and instructions to be executed by processor 1104. Main memory 1106 also may be used for storing temporary variables or other intermediate information during execution of instructions to be executed by processor 1104. Such instructions, when stored in storage media accessible to processor 1104, render computer system 1100 into a special-purpose machine that is customized to perform the operations specified in the instructions. The main memory 1106 may, for example, include instructions to implement server instances, queuing modules, memory queues, storage queues, user interfaces, and/or other aspects of functionality of the present disclosure, according to various implementations.

Computer system 1100 further includes a read only memory (ROM) 1108 or other static storage device coupled to bus 1102 for storing static information and instructions for processor 1104. A storage device 1110, such as a magnetic disk, optical disk, or USB thumb drive (Flash drive), and/or the like, is provided and coupled to bus 1102 for storing information and instructions.

Computer system 1100 may be coupled via bus 1102 to a display 1112, such as a cathode ray tube (CRT) or LCD display (or touch screen), for displaying information to a computer user. An input device 1114, including alphanumeric and other keys, is coupled to bus 1102 for communicating information and command selections to processor 1104. Another type of user input device is cursor control 1116, such as a mouse, a trackball, or cursor direction keys for communicating direction information and command selections to processor 1104 and for controlling cursor movement on display 1112. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computer system 1100 may include a user interface module to implement a GUI that may be stored in a mass storage device as computer executable program instructions that are executed by the computing device(s). Computer system 1100 may further, as described below, implement the techniques described herein using customized hard-wired logic, one or more ASICs or FPGAs, firmware and/or program logic which in combination with the computer system causes or programs computer system 1100 to be a special-purpose machine. According to one implementation, the techniques herein are performed by computer system 1100 in response to processor(s) 1104 executing one or more sequences of one or more computer-readable program instructions contained in main memory 1106. Such instructions may be read into main memory 1106 from another storage medium, such as storage device 1110. Execution of the sequences of instructions contained in main memory 1106 causes processor(s) 1104 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1104 for execution. For example, the instructions may initially be carried on a magnetic disk or solid-state drive of a remote computer. The remote computer can load the instructions into its dynamic memory and send the instructions over a telephone line using a modem. A modem local to computer system 1100 can receive the data on the telephone line and use an infra-red transmitter to convert the data to an infra-red signal. An infra-red detector can receive the data carried in the infra-red signal and appropriate circuitry can place the data on bus 1102. Bus 1102 carries the data to main memory 1106, from which processor 1104 retrieves and executes the instructions. The instructions received by main memory 1106 may optionally be stored on storage device 1110 either before or after execution by processor 1104.

Computer system 1100 also includes a communication interface 1118 coupled to bus 1102. Communication interface 1118 provides a two-way data communication coupling to a network link 1020 that is connected to a local network 1122. For example, communication interface 1118 may be an integrated services digital network (ISDN) card, cable modem, satellite modem, or a modem to provide a data communication connection to a corresponding type of telephone line. As another example, communication interface 1118 may be a local area network (LAN) card to provide a data communication connection to a compatible LAN (or WAN component to communicated with a WAN). Wireless links may also be implemented. In any such implementation, communication interface 1118 sends and receives electrical, electromagnetic, or optical signals that carry digital data streams representing various types of information.

Network link 1120 typically provides data communication through one or more networks to other data devices. For example, network link 1120 may provide a connection through local network 1122 to a host computer 1124 or to data equipment operated by an Internet Service Provider (ISP) 1126. ISP 1126 in turn provides data communication services through the worldwide packet data communication network now commonly referred to as the "Internet" 1128. Local network 1122 and Internet 1128 both use electrical, electromagnetic, or optical signals that carry digital data streams. The signals through the various networks and the signals on network link 1120 and through communication interface 1118, which carry the digital data to and from computer system 1100, are example forms of transmission media.

Computer system 1100 can send messages and receive data, including program code, through the network(s), network link 1120 and communication interface 1118. In the Internet example, a server 1130 might transmit a requested code for an application program through Internet 1128, ISP 1126, local network 1122 and communication interface 1118.

The received code may be executed by processor 1104 as it is received, and/or stored in storage device 1110, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computerized method, performed by a computing system having one or more hardware computer processors and one or more non-transitory computer readable storage device storing software instructions executable by the computing system to perform the computerized method comprising: receiving, via a user interface, a first user input describing a task; generating a first prompt including the first user input and code generation instructions, wherein the code generation instructions include instructions to generate computer-executable code to perform the task; providing the first prompt to an artificial intelligence ("Al") model; receiving an output from the Al model in response to the first prompt, wherein the output includes first computer-executable code; determining whether the first computer-executable code is valid; and in response to determining the first computer-executable code is valid, executing the computer-executable code.

Clause 2. The computerized method of Clause 1, further comprising generating an artifact with the executed computer-executable code and resulting variable values from the executed computer-executable code and storing the artifact in ontology data.

Clause 3. The computerized method of Clause 1 or 2, further comprising: in response to determining the computer-executable code is invalid, generating a second prompt including at least a portion of the first user input and second code generation instructions, wherein the second code generation instructions include instructions to generate second computer-executable code to perform the task based on the second prompt; providing the second prompt to the Al model; receiving a second output from the Al model in response to the second prompt, wherein the second output includes second computer-executable code; validating the second computer-executable code; and in response to validating the second computer-executable code, executing the second computer-executable code.

Clause 4. The computerized method of Clause 3, further comprising generating a second artifact with the executed second computer-executable code and resulting variable values from the executed second computer-executable code.

Clause 5. The computerized method of Clause 3 or 4, wherein the second prompt further includes information associated with the invalid first computer-executable code, and wherein the second code generation instructions further include instructions to generate the second computer-executable code to perform the task based on information associated with the invalid first computer-executable code.

Clause 6. The computerized method of Clause 5, wherein the second code generation instructions further include instructions to generate and output one or more steps used to overcome errors identified in the invalid first computer-executable code.

Clause 7. The computerized method of any of Clauses 1-6, wherein validating the first computer-executable code comprises determining whether the computer-executable code will compile.

Clause 8. The computerized method of any of Clauses 1-7, wherein validating the first computer-executable code comprises parsing the first computer-executable code and determining whether a validation rule has been violated.

Clause 9. The computerized method of any of Clauses 1-8, further comprising: determining to generate an additional prompt; generating a third prompt including the first user input and third code generation instructions, wherein the third code generation instructions include instructions to generate third computer-executable code to perform the task based on the third prompt; providing the third prompt to the Al model; receiving a third output from the Al model in response to third second prompt; and validating the third computer-executable code.

Clause 10. The computerized method of Clause 9, further comprising: executing the third computer-executable code; and generating a third artifact with the executed third computer-executable code and resulting variable values from the executed third computer-executable code.

Clause 11. The computerized method of Clause 9, wherein the determining to generate the additional prompt comprises: generating a fourth prompt including a result of the executed computer readable code, task generating instructions, and one or both of the first user input or the task, wherein the task generating instructions include instructions to determine whether additional tasks based on an evaluation of the result of the executed computer readable code and the first user input and/or the task; providing the fourth prompt to a second AI model; receiving an output from the second Al model in response to fourth second prompt; and determining, from the output from the second Al model, whether to generate the additional prompt.

Clause 12. The computerized method of Clause 11, wherein the Al model and the second Al model are at least one of: different Al models, or a same Al model.

Clause 13. The computerized method of Clause 11, wherein the output from the second Al model includes an indication that the task is not accomplished by the result of the executed computer-executable code.

Clause 14. The computerized method of Clause 11, wherein the output from the second Al model includes an indication to perform additional tasks based on the first user input and the result of the executed computer-executable code.

Clause 15. The computerized method of any of Clauses 1-14, further comprising: accessing one or more information sources associated with the task; extracting a plurality of information nodes from the one or more information sources; and generating associations between one or more information nodes of the plurality of information nodes.

Clause 16. The computerized method of Clause 15, wherein the first user input includes indications of at least one of the associations between the one or more information nodes.

Clause 17. The computerized method of Clause 15, wherein the first prompt further includes the plurality of information nodes and the associations between the one or more information nodes.

Clause 18. The computerized method of any of Clauses 1-17, wherein the Al model comprises at least one of: language models, or large language models ("LLM").

Clause 19. A system comprising: one or more computer-readable storage mediums or devices comprising, configured to store, and/or storing program instructions; and one or more processors configured to execute the program instructions to cause the system to: receive, via a user interface, a first user input describing a task; generate a first prompt including the first user input and code generation instructions, wherein the code generation instructions include instructions to generate computer-executable code to perform the task; provide the first prompt to an artificial intelligence ("Al") model; receive an output from the Al model in response to the first prompt, wherein the output includes first computer-executable code; determine whether the first computer-executable code is valid; and in response to determining the first computer-executable code is valid, execute the computer-executable code.

Clause 20. One or more non-transitory computer-readable media comprising computer-executable instructions for managing one or more models, wherein the computer-executable instructions, when executed by a computer system, cause the computer system to perform operations comprising: receiving, via a user interface, a first user input describing a task; generating a first prompt including the first user input and code generation instructions, wherein the code generation instructions include instructions to generate computer-executable code to perform the task; providing the first prompt to an artificial intelligence ("Al") model; receiving an output from the Al model in response to the first prompt, wherein the output includes first computer-executable code; determining whether the first computer-executable code is valid; and in response to determining the first computer-executable code is valid, executing the computer-executable code.

## Claims

1. A computerized method, performed by a computing system having one or more hardware computer processors and one or more non-transitory computer readable storage device storing software instructions executable by the computing system to perform the computerized method comprising:
receiving, via a user interface, a first user input describing a task;
generating a first prompt including the first user input and code generation instructions, wherein the code generation instructions include instructions to generate computer-executable code to perform the task;
providing the first prompt to an artificial intelligence ("Al") model;
receiving an output from the Al model in response to the first prompt, wherein the output includes first computer-executable code;
determining whether the first computer-executable code is valid; and
in response to determining the first computer-executable code is valid, executing the computer-executable code.

2. The computerized method of Claim 1, further comprising generating an artifact with the executed computer-executable code and resulting variable values from the executed computer-executable code and storing the artifact in ontology data.

3. The computerized method of Claim 1 or Claim 2, further comprising:
in response to determining the computer-executable code is invalid, generating a second prompt including at least a portion of the first user input and second code generation instructions, wherein the second code generation instructions include instructions to generate second computer-executable code to perform the task based on the second prompt;
providing the second prompt to the Al model;
receiving a second output from the Al model in response to the second prompt, wherein the second output includes second computer-executable code;
validating the second computer-executable code; and
in response to validating the second computer-executable code, executing the second computer-executable code.

4. The computerized method of Claim 3, further comprising generating a second artifact with the executed second computer-executable code and resulting variable values from the executed second computer-executable code.

5. The computerized method of Claim 3 or claim 4, wherein the second prompt further includes information associated with the invalid first computer-executable code, and wherein the second code generation instructions further include instructions to generate the second computer-executable code to perform the task based on information associated with the invalid first computer-executable code.

6. The computerized method of Claim 5, wherein the second code generation instructions further include instructions to generate and output one or more steps used to overcome errors identified in the invalid first computer-executable code.

7. The computerized method of any preceding Claim, wherein validating the first computer-executable code comprises at least one of: determining whether the computer-executable code will compile; or parsing the first computer-executable code and determining whether a validation rule has been violated.

8. The computerized method of any preceding Claim, further comprising:
determining to generate an additional prompt;
generating a third prompt including the first user input and third code generation instructions, wherein the third code generation instructions include instructions to generate third computer-executable code to perform the task based on the third prompt;
providing the third prompt to the Al model;
receiving a third output from the Al model in response to third second prompt; and
validating the third computer-executable code.

9. The computerized method of Claim 8, further comprising:
executing the third computer-executable code; and
generating a third artifact with the executed third computer-executable code and resulting variable values from the executed third computer-executable code.

10. The computerized method of Claim 8 or Claim 9, wherein the determining to generate the additional prompt comprises:
generating a fourth prompt including a result of the executed computer readable code, task generating instructions, and one or both of the first user input or the task, wherein the task generating instructions include instructions to determine whether additional tasks based on an evaluation of the result of the executed computer readable code and the first user input and/or the task;
providing the fourth prompt to a second AI model;
receiving an output from the second Al model in response to fourth second prompt; and
determining, from the output from the second Al model, whether to generate the additional prompt.

11. The computerized method of Claim 10, wherein the Al model and the second Al model are at least one of: different Al models, or a same Al model.

12. The computerized method of Claim 10 or Claim 11, wherein the output from the second Al model includes at least one of:
an indication that the task is not accomplished by the result of the executed computer-executable code; or
an indication to perform additional tasks based on the first user input and the result of the executed computer-executable code.

13. The computerized method of any preceding Claim, further comprising:
accessing one or more information sources associated with the task;
extracting a plurality of information nodes from the one or more information sources; and
generating associations between one or more information nodes of the plurality of information nodes,
wherein optionally the first user input includes indications of at least one of the associations between the one or more information nodes.

14. The computerized method of Claim 13, wherein the first prompt further includes the plurality of information nodes and the associations between the one or more information nodes.

15. A system comprising:
one or more computer-readable storage mediums or devices comprising, configured to store, and/or storing program instructions; and
one or more processors configured to execute the program instructions to cause the system to perform the method of any preceding claim.
